# NEW EUROPEAN PATENT SPECIFICATION

(11) **EP 3 868 549 B2**
(45) Date of publication and mention of the opposition decision: **13.05.2026**
(45) Mention of the grant of the patent: 05.04.2023
(21) Application number: 21156321.8
(22) Date of filing: 10.02.2021
(51) Int. Cl.: B29D 30/60, B60C 11/00, B60C 19/08, B29D 30/52

(54) **TREAD RUBBER FORMING METHOD AND TREAD RUBBER FORMING DEVICE**
VERFAHREN ZUM FORMEN VON LAUFFLÄCHENGUMMI UND VORRICHTUNG ZUM FORMEN VON LAUFFLÄCHENGUMMI
PROCÉDÉ ET DISPOSITIF DE FORMATION DE CAOUTCHOUC DE BANDE DE ROULEMENT

(30) Priority: 18.02.2020 JP 2020025491
(43) Date of publication of application: 25.08.2021
(73) Proprietor: Sumitomo Rubber Industries, Ltd., Kobe-shi, Hyogo-ken 651-0072 (JP)
(72) Inventor: ONIMATSU, Hiroyuki, Kobe-shi, Hyogo 651-0072 (JP)
(74) Representative: Forresters IP LLP

(56) References cited:
- EP-A1- 1 358 998
- EP-A1- 1 533 144
- EP-A1- 1 645 442
- EP-A1- 2 230 105
- EP-A1- 2 468 490
- EP-A1- 2 468 490
- EP-A1- 2 487 051
- EP-A1- 2 487 051
- EP-A1- 2 514 606
- EP-A1- 2 572 902
- EP-A1- 2 572 902
- EP-A2- 1 106 335
- EP-A2- 1 175 992
- EP-B1- 2 013 007
- EP-B1- 2 418 104
- WO-A1-02/060676
- WO-A1-2018/122754
- JP-A- 2001 047 525
- JP-A- 2002 046 194
- JP-A- 2005 035 337
- JP-A- 2007 260 962
- JP-A- 2010 115 935
- JP-A- 2010 158 838
- JP-A- 2013 035 218
- JP-A- 2013 079 049
- JP-A- 2016 088 029
- JP-A- 2017 113 994
- JP-B2- 4 070 504
- US-A1- 2010 326 588
- US-A1- 2011 146 885
- Notice of Reasons of Refusal of corresponding Japanese application, issued on 21 -11 -2023
- Prosecution letter of Proprietor of 31 -1-2022
- Page 10 of Notice of opposition against EP 1 827 807
- ASTM D257-99

## Description

### Field of the Invention

The present invention relates to a technology of spirally winding and superposing tape-shaped unvulcanized rubber strips to form an annular tread rubber.

### Description of the Background Art

Conventionally, technologies have been known in which rubber strips are spirally wound and superposed to form a jointless tread rubber so that the uniformity of a tire is improved (see, for example, Japanese Laid-Open Patent Publication No. 2005-35337).

Japanese Laid-Open Patent Publication No. 2005-35337 discloses a technology of forming, in a jointless manner, a tread rubber that includes an electrically-conductive band penetrating two rubber layers in the thickness direction.

Meanwhile, tread rubbers including three rubber layers have been recently studied to, for example, improve wet performance, low fuel consumption performance, and responsiveness in a balanced manner.

However, the technology disclosed in the above-described Japanese Laid-Open Patent Publication No. 2005-35337 has difficulty in forming, in a jointless manner, a tread rubber that includes three rubber layers and an electrically-conductive layer.

EP 2 487 051 A1 discloses a tread rubber forming method for the formation of a tread rubber including two rubber layers and an electrically-conductive layer. The tread rubber has a cap portion which is formed by a nonconductive rubber and constructs a ground-contacting surface, a base portion which is formed by a nonconductive rubber and is provided in an inner side in the tire radial direction of the cap portion, and a conductive portion which is formed by a conductive rubber and reaches a bottom surface of the tread rubber from a ground-contacting surface.

### SUMMARY OF THE INVENTION

The present invention has been made in view of the above circumstances, and a main object of the present invention is to provide a tread rubber forming method and a tread rubber forming device that enable jointless formation of a tread rubber including three rubber layers and an electrically-conductive layer.

A first aspect of the present invention is directed to a method for spirally winding and superposing tape-shaped unvulcanized rubber strips on an outer side in a radial direction of a cylindrical body to form an annular tread rubber, the method as recited by Claim 1.

It is preferable that, in the tread rubber forming method according to the present first aspect, the fifth step includes winding the third rubber strip in a region that includes the separation portion.

A second aspect of the present invention is directed to a method for spirally winding and superposing tape-shaped unvulcanized rubber strips on an outer side in a radial direction of a cylindrical body to form an annular tread rubber, the method as recited by Claim 3.

It is preferable that, in the tread rubber forming method according to the present second aspect, a length W2 in the axial direction of the first intermediate layer formed in the second step is 60% to 80% of a length W1 in the axial direction of the tread rubber.

A third aspect of the present invention is directed to a device that spirally winds and superposes tape-shaped unvulcanized rubber strips to form an annular tread rubber, the device as recited by Claim 5.

It is preferable that, in the tread rubber forming device according to the present third aspect, the third applicator winds and superposes, on an outer side in a radial direction of the base layer and the electrically-conductive layer, the third rubber strip in a region on the other side in the axial direction relative to the electrically-conductive layer while moving the third rubber strip in the axial direction, such that a portion of the electrically-conductive layer is exposed to an outer side in the radial direction of the tread rubber, to form a second cap layer.

It is preferable that, in the tread rubber forming device according to the present third aspect, the second applicator winds and superposes, on the outer circumferential surface of the base layer and an outer circumferential surface of the electrically-conductive layer, the second rubber strip in a region on the other side in the axial direction relative to the electrically-conductive layer while moving the second rubber strip in the axial direction, such that a portion of the electrically-conductive layer is exposed to an outer side in the radial direction of the second rubber strip, to form a second intermediate layer.

It is preferable that the tread rubber forming device according to the present third aspect further includes: a pair of cylindrical bodies each exclusively disposed at a first position or a second position; and a movement portion configured to move the cylindrical bodies, to mutually exchange the cylindrical bodies disposed at the respective positions, wherein the first applicator and the second applicator are arranged at positions corresponding to the first position, and the third applicator and the fourth applicator are arranged at positions corresponding to the second position.

A fourth aspect of the present invention is directed to a device that spirally winds and superposes tape-shaped unvulcanized rubber strips to form an annular tread rubber, the device including: a first applicator configured to wind and superpose a first rubber strip while moving the first rubber strip in an axial direction of the tread rubber, to form a base layer; a second applicator configured to wind and superpose a non-electrically-conductive second rubber strip on an outer circumferential surface of the base layer while moving the second rubber strip in the axial direction, to form an intermediate layer; a third applicator configured to wind an electrically-conductive third rubber strip from a position of contact with the base layer to an outer circumferential surface of the intermediate layer, to form a first electrically-conductive layer; a fourth applicator configured to wind and superpose a non-electrically-conductive fourth rubber strip on the outer circumferential surface of the intermediate layer while moving the fourth rubber strip in the axial direction, to form a cap layer; and a fifth applicator configured to wind an electrically-conductive fifth rubber strip from a position of contact with the first electrically-conductive layer to an outer circumferential surface of the cap layer, to form a second electrically-conductive layer.

It is preferable that, in the tread rubber forming device according to the present fourth aspect: the second applicator winds and superposes the second rubber strip in a region on one side in the axial direction on the outer circumferential surface of the base layer, to form a first intermediate layer; the third applicator winds, to an outer circumferential surface of the first intermediate layer, the third rubber strip in a region on another side in the axial direction relative to the first intermediate layer, to form the first electrically-conductive layer; and the second applicator winds and superposes the second rubber strip on the outer circumferential surface of the base layer and an outer circumferential surface of the first electrically-conductive layer such that a portion of the first electrically-conductive layer is exposed to an outer side in a radial direction of the second rubber strip, to form a second intermediate layer.

It is preferable that, in the tread rubber forming device according to the present fourth aspect: the fourth applicator winds and superposes the fourth rubber strip on a portion of the outer circumferential surface of the first intermediate layer, to form a first cap layer; the fifth applicator winds, to the outer circumferential surface of the intermediate layer, the fifth rubber strip in a region on the other side in the axial direction relative to the first cap layer, to form the second electrically-conductive layer; and the fourth applicator winds and superposes the fourth rubber strip on the outer circumferential surface of the intermediate layer and an outer circumferential surface of the second electrically-conductive layer such that a portion of the second electrically-conductive layer is exposed to an outer side in the radial direction of the fourth rubber strip, to form a second cap layer.

It is preferable that the tread rubber forming device according to the present fourth aspect further includes: a pair of cylindrical bodies each exclusively disposed at a first position or a second position; and a movement portion configured to move the cylindrical bodies, to mutually exchange the cylindrical bodies disposed at the respective positions, wherein the first applicator to the third applicator are arranged at positions corresponding to the first position, and the fourth applicator and the fifth applicator are arranged at positions corresponding to the second position.

In the tread rubber forming method according to the present first aspect, the base layer is formed in the first step, and the first intermediate layer is formed on a portion of the outer circumference of the base layer in the second step. In addition, the first cap layer is formed on the outer circumference of the first intermediate layer in the third step, and the electrically-conductive layer is formed from the position of contact with the base layer to the outer circumference of the first cap layer in the fourth step. Furthermore, the second cap layer is formed such that a portion of the electrically-conductive layer is exposed to the outer side in the radial direction of the tread rubber in the fifth step. Therefore, the tread rubber including the electrically-conductive layer and three rubber layers which are the base layer, the intermediate layer, and the cap layer, is formed in a jointless manner.

In the tread rubber forming device according to the present third aspect, the first applicator forms the base layer, and the second applicator forms the first intermediate layer on a portion of the outer circumference of the base layer. In addition, the third applicator forms the first cap layer on the outer circumference of the first intermediate layer, and the fourth applicator forms the electrically-conductive layer from the position of contact with the base layer to the outer circumference of the first cap layer. Furthermore, the third applicator forms the second cap layer such that a portion of the electrically-conductive layer is exposed to the outer side in the radial direction of the tread rubber. Therefore, the tread rubber including the electrically-conductive layer and three rubber layers which are the base layer, the intermediate layer, and the cap layer, is formed in a jointless manner.

In the tread rubber forming device according to the present fourth aspect, the first applicator forms the base layer, and the second applicator forms the first intermediate layer on a portion of the outer circumference of the base layer. In addition, the third applicator forms the first electrically-conductive layer from the position of contact with the base layer to the outer circumference of the first cap layer, and the fourth applicator forms the second intermediate layer such that a portion of the first electrically-conductive layer is exposed to the outer side in the radial direction of the second rubber strip. Furthermore, the fifth applicator forms the first cap layer on the outer circumference of the first intermediate layer, and the sixth applicator forms the second electrically-conductive layer from the position of contact with the first electrically-conductive layer to the outer circumferential surface of the first cap layer, and the seventh applicator forms the second cap layer such that a portion of the second electrically-conductive layer is exposed to the outer side in the radial direction of the tread rubber. Therefore, the tread rubber including the electrically-conductive layer and three rubber layers which are the base layer, the intermediate layer, and the cap layer, is formed in a jointless manner.

### BRIEF DESCRIPTION OF THE DRAWINGS

FIG. 1 is a cross-sectional view of a tread rubber formed by a tread rubber forming method not forming an embodiment;
FIG. 2 is a front view showing a schematic configuration of a tread rubber forming device according to an embodiment of the present invention;
FIG. 3 is a cross-sectional view conceptually showing a first step and a second step of a tread rubber forming method not forming an embodiment;
FIG. 4 is a cross-sectional view conceptually showing a third step and a fourth step subsequent to FIG. 3;
FIG. 5 is a cross-sectional view conceptually showing a fifth step and the like subsequent to FIG. 4;
FIG. 6 is a cross-sectional view conceptually showing a first step and a second step in a modification of the tread rubber forming method in FIG. 3;
FIG. 7 is a cross-sectional view conceptually showing a third step to a fifth step subsequent to FIG. 6;
FIG. 8 is a cross-sectional view conceptually showing a first step and a second step in another modification of the tread rubber forming method in FIG. 3;
FIG. 9 is a cross-sectional view conceptually showing a third step to a fifth step subsequent to FIG. 8;
FIG. 10 is a front view showing a schematic configuration of a modification of the tread rubber forming device in FIG. 2;
FIG. 11 is a cross-sectional view conceptually showing a first step to a fourth step of a tread rubber forming method not forming an embodiment;
FIG. 12 is a cross-sectional view conceptually showing a fifth step to a seventh step subsequent to FIG. 11;
FIG. 13 is a cross-sectional view showing a modification of the tread rubber in FIG. 1, which does not form an embodiment;
FIG. 14 is a cross-sectional view conceptually showing a tread rubber forming method for forming the tread rubber in FIG. 13, which does not form an embodiment;
FIG. 15 is a cross-sectional view showing another modification of the tread rubber in FIG. 1, which does not form an embodiment;
FIG. 16 is a cross-sectional view conceptually showing a tread rubber forming method for forming the tread rubber in FIG. 15, which does not form an embodiment;
FIG. 17 is a front view showing a schematic configuration of another modification of the tread rubber forming device in FIG. 2; and
FIG. 18 is a front view showing a schematic configuration of still another modification of the tread rubber forming device in FIG. 2.

### DESCRIPTION OF THE PREFERRED EMBODIMENTS

Hereinafter, an embodiment of the present invention will be described with reference to the drawings.

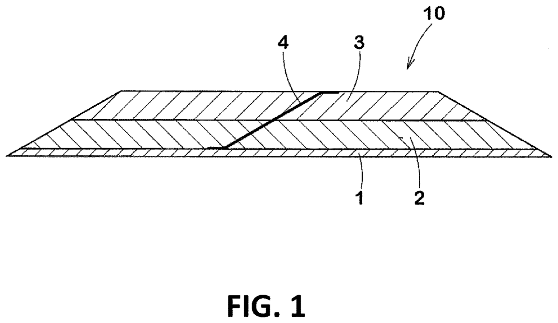

FIG. 1 is a cross-sectional view of a tread rubber, for a tire, that is formed by a tread rubber forming method not forming an embodiment. A tread rubber 10 is annularly formed. The tread rubber 10 is formed by spirally winding and superposing tape-shaped unvulcanized rubber strips.

The tread rubber 10 has a three-layer structure including: a base layer 1 located at the innermost circumference; an intermediate layer 2 located on the outer circumferential side of the base layer 1; and a cap layer 3 located on the outer circumferential side of the intermediate layer 2. The tread rubber 10 further includes an electrically-conductive layer 4 penetrating the intermediate layer 2 and the cap layer 3 in the thickness direction.

The base layer 1 is formed according to a formula that places importance on, for example, responsiveness. The intermediate layer 2 is formed according to a formula that places importance on, for example, low fuel consumption performance.

The cap layer 3 is formed according to a formula that places importance on, for example, wet performance. The low fuel consumption performance and the wet performance are attained by a (silica-rich) rubber in which a large amount of silica is blended as a reinforcing agent.

In general, silica-rich rubbers have non-electrically-conductive properties. Hereinafter, in the present application, a rubber material having a post-vulcanization volume specific resistance not lower than 1 x 10⁸ Qcm is defined as a non-electrically-conductive rubber. The volume specific resistance can be measured with, for example, an electrical resistivity measurement device by using a 15 cm-square rubber sample having a thickness of 2 mm under the condition that the applied voltage is 500 V, the air temperature is 25°C, and the humidity is 50%.

The electrically-conductive layer 4 is implemented by, for example, a (carbon-rich) rubber in which a large amount of carbon black is blended as a reinforcing agent. In general, carbon-rich rubbers have electrically-conductive properties. Hereinafter, in the present application, a rubber material having a post-vulcanization volume specific resistance not higher than 1 X 10⁷ 0cm is defined as an electrically-conductive rubber.

The electrically-conductive layer 4 penetrating the intermediate layer 2 and the cap layer 3 causes conduction between the outer surface and the inside of the tread rubber 10. On the inner side in the radial direction of the tread rubber 10, for example, electrically-conductive rubbers such as a topping rubber for a belt member and a sidewall rubber are arranged. Therefore, if, for example, the base layer 1 is formed of an electrically-conductive rubber, conduction is made between the outer surface of the tread rubber 10, and the topping rubber for the belt member and the like, via the electrically-conductive layer 4 and the base layer 1, whereby electric charges accumulated in the tire are released.

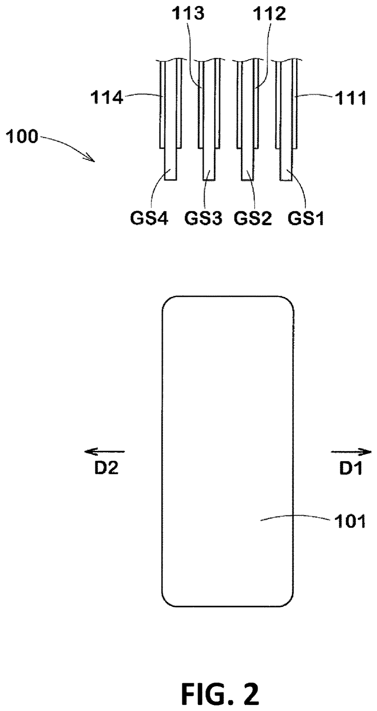

FIG. 2 shows an example of a tread rubber forming device 100 suitably used in the present tread rubber forming method. The tread rubber forming device 100 includes: a cylindrical body 101 serving as a base for forming thereon the tread rubber 10; and a first applicator 111, a second applicator 112, a third applicator 113, and a fourth applicator 114 for supplying rubber strips GS1, GS2, GS3, and GS4.

A casing that forms a main part (a component other than a tread portion) of a green tire as well as a drum for forming thereon the tread rubber 10, can be used as the cylindrical body 101. A belt layer and a band layer may be formed on the outer circumferential surface of the cylindrical body. Alternatively, a rigid core may be used as the cylindrical body. In this case, a carcass layer, a belt layer, a band layer, and the like are formed on the outer surface of the rigid core, and the tread rubber 10 is formed on the outer circumferential surface of the outermost layer. In the present application, in an axial direction of the cylindrical body 101 (an axial direction of the tread rubber 10), one side (the right direction side in the drawings) is referred to as a first axial direction D1 side and the other side is referred to as a second axial direction D2 side for the sake of convenience. In the axial direction of the cylindrical body 101, the other side may be referred to as the first axial direction D1 side and one side may be referred to as the second axial direction D2 side.

The first applicator 111 to the fourth applicator 114 are arranged at positions corresponding to the cylindrical body 101. The positions corresponding to the cylindrical body 101 mean positions that allow the rubber strips GS1, GS2, GS3, and GS4 to be supplied to the cylindrical body 101.

In the tread rubber forming device 100, the rubber strips GS1, GS2, GS3, and GS4 are wound on the outer side in the radial direction of the cylindrical body 101 being rotationally driven, to form the tread rubber 10.

The first applicator 111 to the fourth applicator 114 and the like are configured to be movable in the axial direction of each of cylindrical bodies 101 and 102. The cylindrical bodies 101 and 102 may each be configured to be movable in the axial direction thereof. In addition, the first applicator 111 to the fourth applicator 114 and the like may be configured, as necessary, to be movable in a front-rear direction perpendicular to the axial direction of each of the cylindrical bodies 101 and 102.

Publicly-known rubber strip supply devices can be used as the first applicator 111 to the fourth applicator 114 and the like. For example, the first applicator 111 can be implemented by a device including: a belt for conveying a first rubber strip GS1; a roller for pressing a wound portion of the first rubber strip GS1 toward the inner side in the radial direction of the cylindrical body 101; and the like. The configurations of the second applicator 112 to the fourth applicator 114 and the like are also similar to the configuration of the first applicator 111.

Rotation of the cylindrical bodies 101 and 102 and movement of the first applicator 111 and the like and the cylindrical bodies 101 and 102, are controlled by a control section (not shown). The control section synchronously controls the first applicator 111 and the like or the cylindrical bodies 101 and 102. Although the mode in which the first applicator 111 and the like are movable in the axial direction will be described hereinafter, the same description applies also to the mode in which the cylindrical bodies 101 and 102 are movable in the axial direction.

The first applicator 111 supplies the first rubber strip GS1 to form the base layer 1. The first rubber strip GS1 is formed of an electrically-conductive ingredient. Therefore, conduction is made between the electrically-conductive layer 4, and a topping rubber for a belt member and a sidewall rubber, via the base layer 1, whereby electric charges accumulated in the tire are released.

The second applicator 112 supplies the second rubber strip GS2 to form the intermediate layer 2. The second rubber strip GS2 is formed of a non-electrically-conductive ingredient.

The third applicator 113 supplies the third rubber strip GS3 to form the cap layer 3. The third rubber strip GS3 is formed of a non-electrically-conductive ingredient. The fourth applicator 114 supplies the fourth rubber strip GS4 to form the electrically-conductive layer 4. The fourth rubber strip GS4 is formed of an electrically-conductive ingredient.

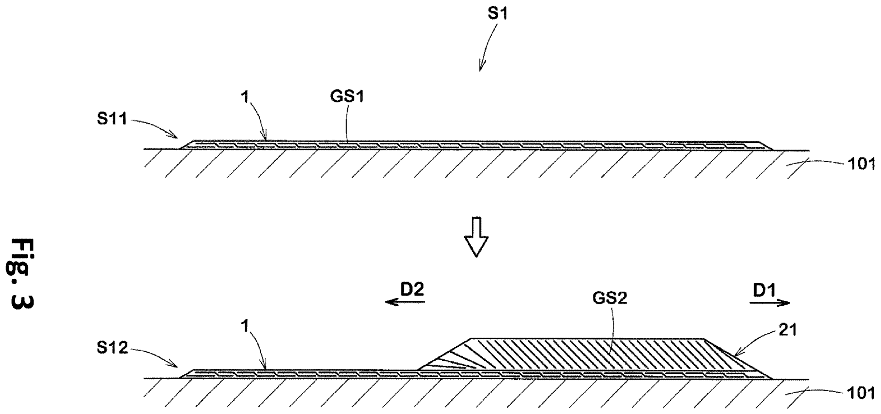

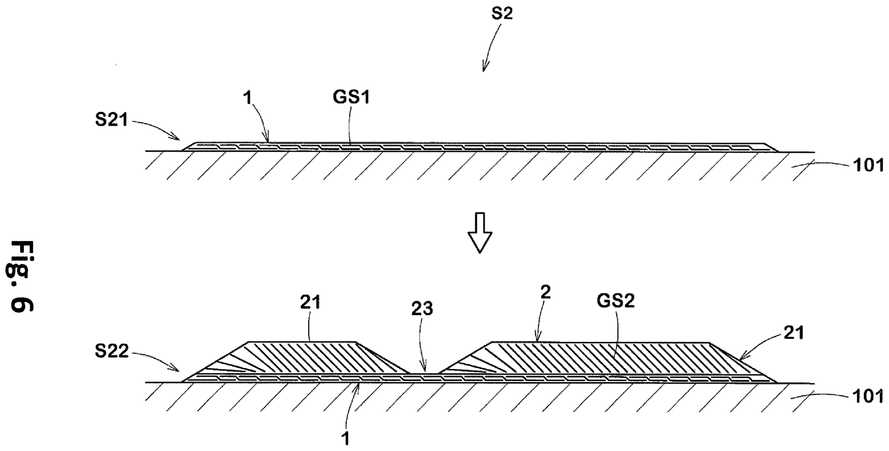

FIG. 3 to FIG. 5 show, in time series, steps of a tread rubber forming method S1 not forming an embodiment. The present tread rubber forming method S1 includes a first step S11 to a fifth step S15. Although the case of forming the tread rubber 10 by using the cylindrical body 101 will be described hereinafter with reference to FIG. 3 to FIG. 5, the same applies also to the case of forming the tread rubber 10 by using the cylindrical body 102 (in addition, the same applies also to FIG. 6 to FIG. 13 described below).

As shown in FIG. 3, in the first step S11, the first applicator 111 winds and superposes the first rubber strip GS1 on the outer circumferential surface of the cylindrical body 101 while moving the first rubber strip GS1 in the axial direction of the cylindrical body 101. By the first step S11, a base layer 1 is formed along the outer circumferential surface of the cylindrical body 101.

It is noted that a belt ply and/or a jointless band may be wound on the outer circumferential surface of the cylindrical body 101 before the first step S11. In this case, the first rubber strip GS1 is wound and superposed on the outer circumferential surface of the belt ply and/or the jointless band (the same applies also to first steps S21, S31, and S41 described later).

In the second step S12, the second applicator 112 winds and superposes the second rubber strip GS2 on a portion of the outer circumferential surface of the base layer 1 (in a region on one side in the axial direction (in FIG. 3, the first axial direction D1 side, i.e., the substantially right half) on the outer circumferential surface of the base layer) while moving the second rubber strip GS2 in the axial direction of the cylindrical body 101. By the second step S12, a first intermediate layer 21 is formed along the outer circumferential surface of the base layer 1. The first intermediate layer 21 is a portion of the intermediate layer 2.

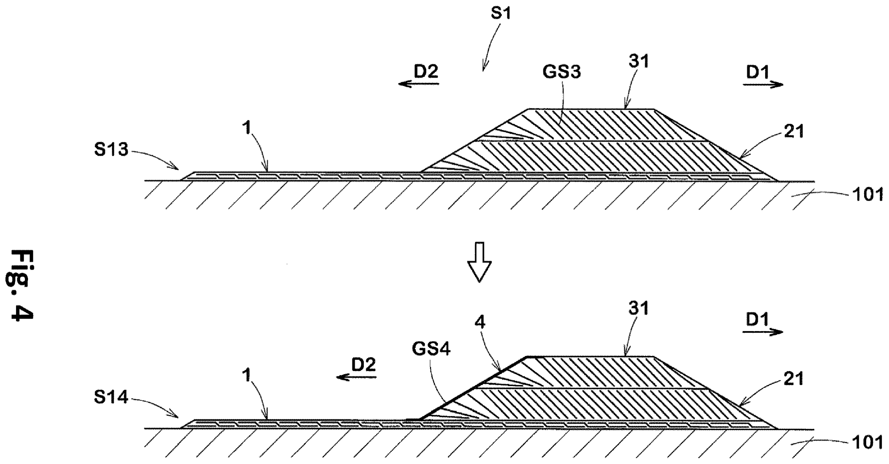

As shown in FIG. 4, in the third step S13, the third applicator 113 winds and superposes the third rubber strip GS3 on the outer circumferential surface of the first intermediate layer 21 while moving the third rubber strip GS3 in the axial direction of the cylindrical body 101. By the third step S13, a first cap layer 31 is formed along the outer circumferential surface of the first intermediate layer 21. The first cap layer 31 is a portion of the cap layer 3.

In the fourth step S14, the fourth applicator 114 winds the fourth rubber strip GS4. The fourth rubber strip GS4 is wound, from the position of contact with the base layer 1 to the outer circumferential surface of the first cap layer 31, in a region on the other side in the axial direction of the cylindrical body 101, i.e. the second axial direction D2 side, relative to the first intermediate layer 21 and the first cap layer 31. By the fourth step S14, an electrically-conductive layer 4 for causing conduction between the tread surface and the inside of the tread portion is formed. In the fourth step S14, it is desirable that the fourth applicator 114 is moved in the axial direction of the cylindrical body 101. Accordingly, the electrically-conductive layer 4 is orderly and evenly formed along the outer circumferential surfaces of the first intermediate layer 21 and the first cap layer 31 without causing any wrinkle or ripple.

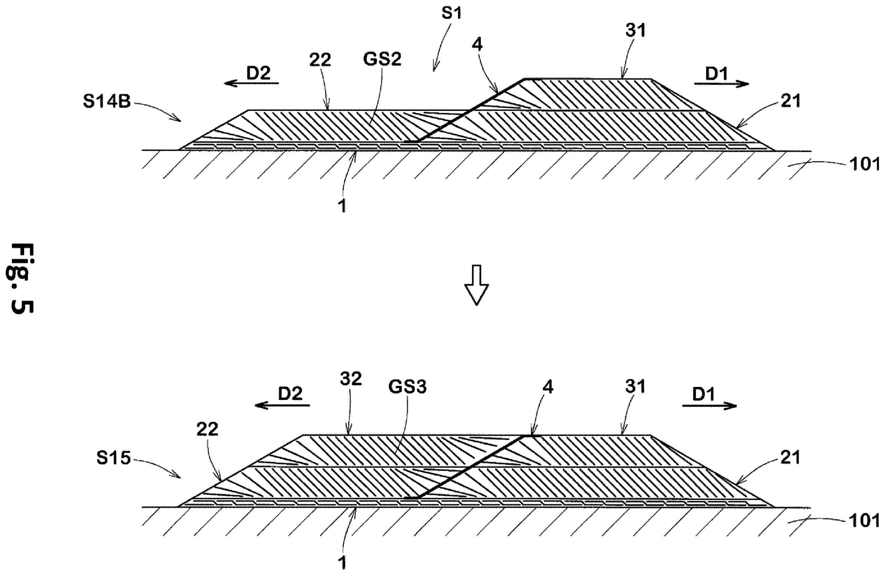

As shown in FIG. 5, in the step S14B, the second applicator 112 winds and superposes the second rubber strip GS2 on the outer circumferential surfaces of the base layer 1 and the electrically-conductive layer 4 while moving the second rubber strip GS2 in the axial direction of the cylindrical body 101. The second rubber strip GS2 is wound and superposed on the second axial direction D2 side relative to the electrically-conductive layer 4 (in FIG. 5, on the substantially left half, i.e., in a region in which no second rubber strip GS2 has been wound and superposed in the second step S12). The second rubber strip GS2 is wound and superposed such that a portion of the electrically-conductive layer 4 is exposed to the outer side in the radial direction of the second rubber strip GS2. By the step S14B, a second intermediate layer 22 is formed. The second intermediate layer 22 is a portion of the intermediate layer 2.

In the fifth step S15, the third applicator 113 winds and superposes the third rubber strip GS3 on the outer side in the radial direction of the base layer 1 (in FIG. 5, on the outer circumferential surface of the second intermediate layer 22) while moving the third rubber strip GS3 in the axial direction. The third rubber strip GS3 is wound and superposed on the second axial direction D2 side relative to the electrically-conductive layer 4 such that a portion of the electrically-conductive layer 4 is exposed to the outer side in the radial direction of the tread rubber 10. By the fifth step S15, a second cap layer 32 is formed. The second cap layer 32 is a portion of the cap layer 3.

In the present tread rubber forming method S1, the base layer 1 is formed in the first step S11, and the first intermediate layer 21 is formed on a portion of the outer circumference of the base layer 1 in the second step S12. In addition, the first cap layer 31 is formed on the outer circumference of the first intermediate layer 21 in the third step S13, the electrically-conductive layer 4 is formed from the position of contact with the base layer 1 to the outer circumference of the first cap layer 31 in the fourth step S14, and the second cap layer 32 is formed such that a portion of the electrically-conductive layer 4 is exposed to the outer side in the radial direction of the tread rubber 10 in the fifth step S15. Therefore, the tread rubber 10 including the electrically-conductive layer 4 and three rubber layers which are the base layer 1, the intermediate layer 2, and the cap layer 3, is formed in a jointless manner.

In addition, the second intermediate layer 22 formed between the base layer and the first cap layer 31 in the step S14B allows low fuel consumption performance to be easily improved.

Similarly, in the present tread rubber forming device 100, the first applicator 111 forms the base layer 1, and the second applicator 112 forms the first intermediate layer 21 on a portion of the outer circumference of the base layer 1. In addition, the third applicator 113 forms the first cap layer 31 on the outer circumference of the first intermediate layer 21, the fourth applicator 114 forms the electrically-conductive layer 4 from the position of contact with the base layer 1 to the outer circumference of the first cap layer 31, and the third applicator 113 forms the second cap layer 32 such that a portion of the electrically-conductive layer 4 is exposed to the outer side in the radial direction of the tread rubber 10. Therefore, the tread rubber 10 including the electrically-conductive layer 4 and three rubber layers which are the base layer 1, the intermediate layer 2, and the cap layer 3, is formed in a jointless manner.

In the second step S12 to the fourth step S14, it is desirable that the second rubber strip GS2, the third rubber strip GS3, and the fourth rubber strip GS4 are wound and superposed in the same direction. In the examples in FIG. 3 and FIG. 4, the second rubber strip GS2, the third rubber strip GS3, and the fourth rubber strip GS4 are each wound and superposed in the first axial direction D1 from a start edge on the second axial direction D2 side. The second rubber strip GS2, the third rubber strip GS3, and the fourth rubber strip GS4 may each be wound and superposed in the second axial direction D2 from a start edge on the first axial direction D1 side.

If the second rubber strip GS2, the third rubber strip GS3, and the fourth rubber strip GS4 are wound in the same direction in this manner, the second rubber strip GS2, the third rubber strip GS3, and the fourth rubber strip GS4 can be at least partially wound at the same time. For example, the third step S13 can be started to start winding the third rubber strip GS3, before the second rubber strip GS2 finishes being wound in the second step S12. In addition, the fourth step S14 can be started to start winding the fourth rubber strip GS4, before the second rubber strip GS2 and the third rubber strip GS3 finish being wound in the second step S12 and the third step S13. Therefore, the time required to form the tread rubber 10 can be shortened, whereby manufacturing efficiency for tires can be easily improved.

In the step S14B and the fifth step S15, it is desirable that the second rubber strip GS2 and the third rubber strip GS3 are wound and superposed in the same direction. In the example in FIG. 5, the second rubber strip GS2 and the third rubber strip GS3 are each wound and superposed in the first axial direction D1 from a start edge on the second axial direction D2 side. The second rubber strip GS2 and the third rubber strip GS3 may each be wound and superposed in the second axial direction D2 from a start edge on the first axial direction D1 side.

If the second rubber strip GS2 and the third rubber strip GS3 are wound in the same direction in this manner, the second rubber strip GS2 and the third rubber strip GS3 can be at least partially wound at the same time. For example, the fifth step S15 can be started to start winding the third rubber strip GS3, before the second rubber strip GS2 finishes being wound in the step S14B. Therefore, the time required to form the tread rubber 10 can be shortened.

In addition, if the second rubber strip GS2 is wound and superposed in the first axial direction D1 from the start edge on the second axial direction D2 side in the step S14B, the step S14B can be started to start winding the second rubber strip GS2, before the first rubber strip GS1 to the fourth rubber strip GS4 finish being wound in the first step S11 to the fourth step S14. Therefore, the time required to form the tread rubber 10 can be shortened.

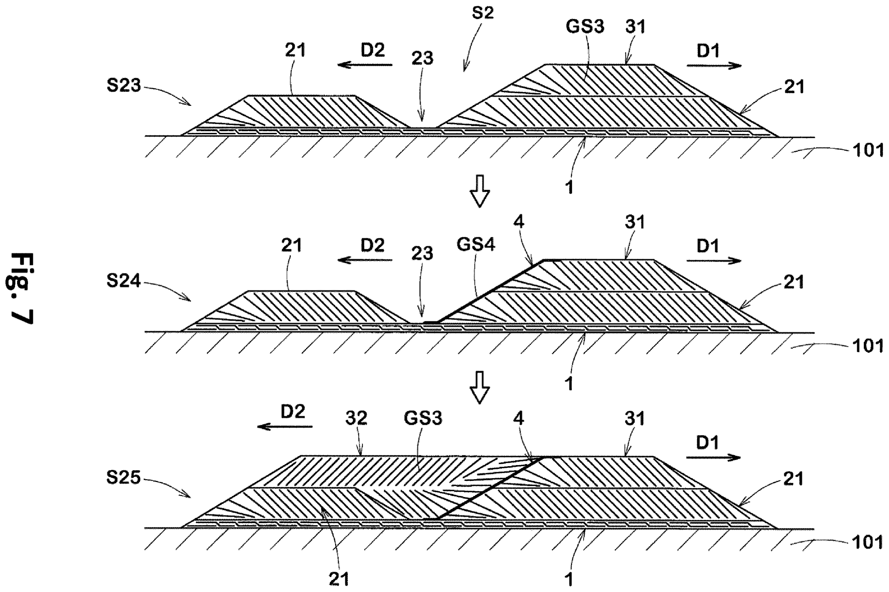

FIG. 6 and FIG. 7 show, in time series, steps of a tread rubber forming method S2 which is a modification of the tread rubber forming method S1. The present tread rubber forming method S2 is executed by using the tread rubber forming device 100. The present tread rubber forming method S2 includes a first step S21 to a fifth step S25.

As shown in FIG. 6, in the first step S21, the first rubber strip GS1 is wound and superposed in the same manner as in the first step S11 shown in FIG. 3. Thus, a base layer 1 is formed along the outer circumferential surface of the cylindrical body 101.

In the second step S22, the second applicator 112 winds and superposes the second rubber strip GS2 on a portion of the outer circumferential surface of the base layer 1 (in FIG. 6, regions excluding a separation portion 23) while moving the second rubber strip GS2 in the axial direction of the cylindrical body 101. By the second step S22, a first intermediate layer 21 is formed along the outer circumferential surface of the base layer 1.

In the second step S22, the first intermediate layer 21 which is discontinuous in the axial direction of the cylindrical body 101 is formed. For a discontinuity region of the first intermediate layer 21, the second rubber strip GS2 is wound at a winding pitch that is larger than the width of the second rubber strip. Accordingly, two first intermediate layers 21 are formed on the outer side in the radial direction of the base layer 1, and a separation portion 23 separating adjacent portions of the second rubber strip GS2 in the axial direction is formed between the first intermediate layers 21.

As shown in FIG. 7, in the third step S23, the third rubber strip GS3 is wound and superposed in the same manner as in the third step S13 shown in FIG. 4. Thus, a first cap layer 31 is formed along the outer circumferential surface of the first intermediate layer 21 on the first axial direction D1 side.

In the fourth step S24, the fourth rubber strip GS4 is wound in the same manner as in the fourth step S14 shown in FIG. 4. Thus, an electrically-conductive layer 4 for causing conduction between the tread surface and the inside of the tread portion is formed. The fourth rubber strip GS4 is wound in a region including the separation portion 23. Accordingly, the electrically-conductive layer 4 is formed from the position of contact with the base layer 1 to the outer circumferential surface of the first cap layer 31.

In the fifth step S25, the third rubber strip GS3 is wound and superposed in the same manner as in the fifth step S15 shown in FIG. 5. The third rubber strip GS3 is wound in a region including the separation portion 23. Accordingly, a second cap layer 32 is formed along the outer circumferential surfaces of the first intermediate layer 21, the base layer 1, and the electrically-conductive layer 4.

In the tread rubber forming method S2, the tread rubber 10 including the electrically-conductive layer 4 and three rubber layers which are the base layer 1, the intermediate layer 2, and the cap layer 3, is formed in a jointless manner.

The desirable winding direction of the second rubber strip GS2, the third rubber strip GS3, and the fourth rubber strip GS4 in the second step S22 to the fifth step S25 of the tread rubber forming method S2, is the same as the desirable winding direction of the second rubber strip GS2, the third rubber strip GS3, and the fourth rubber strip GS4 in the second step S12 to the fifth step S15 of the tread rubber forming method S1.

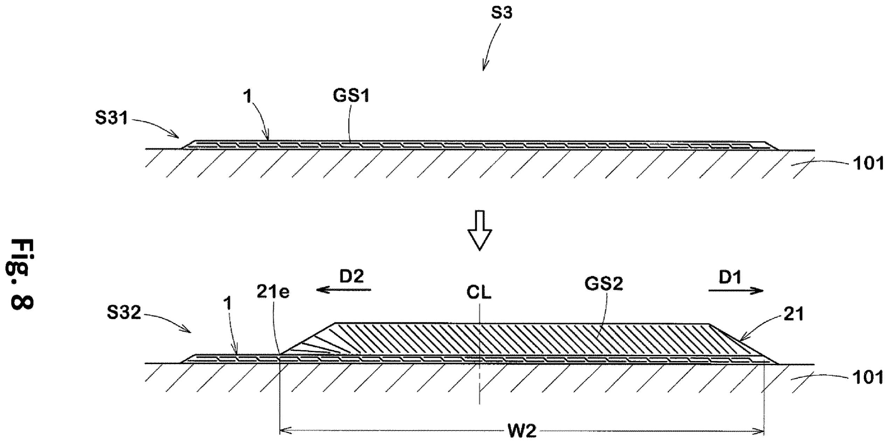

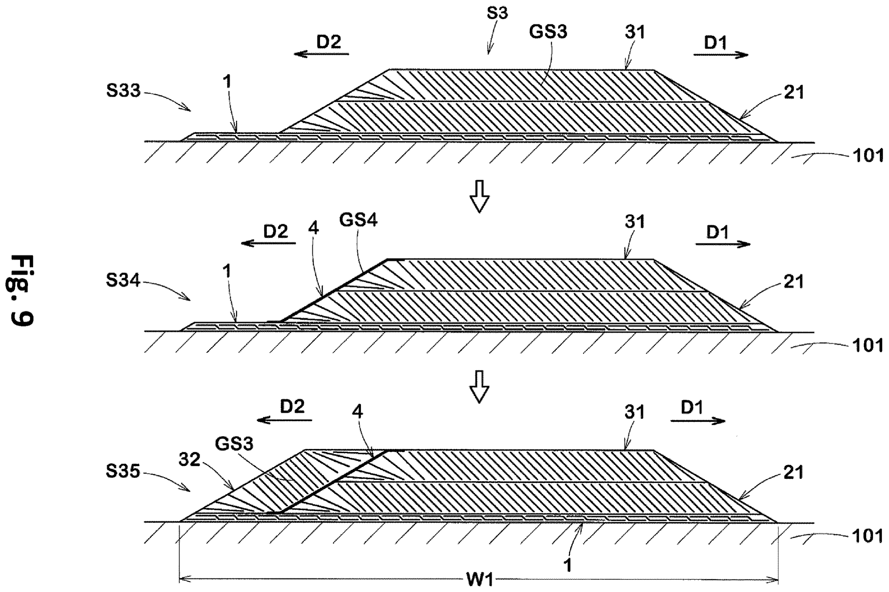

FIG. 8 and FIG. 9 show, in time series, steps of a tread rubber forming method S3 which is another modification of the tread rubber forming method S1. The present tread rubber forming method S3 is executed by using the tread rubber forming device 100. The present tread rubber forming method S3 includes a first step S31 to a fifth step S35.

As shown in FIG. 8, in the first step S31, the first rubber strip GS1 is wound and superposed in the same manner as in the first step S11 shown in FIG. 3. Thus, a base layer 1 is formed along the outer circumferential surface of the cylindrical body 101.

In the second step S32, the second rubber strip GS2 is wound and superposed in the same manner as in the second step S12 shown in FIG. 3. Thus, a first intermediate layer 21 is formed along the outer circumferential surface of the base layer 1.

In the second step S32, the second rubber strip GS2 is wound and superposed such that an edge 21e, on the second axial direction D2 side, of the first intermediate layer 21 is located on the second axial direction D2 side relative to an equator CL of the tread rubber 10.

As shown in FIG. 9, in the third step S33, the third rubber strip GS3 is wound and superposed in the same manner as in the third step S13 shown in FIG. 4. Thus, a first cap layer 31 is formed along the outer circumferential surface of the first intermediate layer 21.

In the fourth step S34, the fourth rubber strip GS4 is wound in the same manner as in the fourth step S14 shown in FIG. 4. Accordingly, an electrically-conductive layer 4 for causing conduction between the tread surface and the inside of the tread portion is formed from the position of contact with the base layer 1 to the outer circumferential surface of the first cap layer 31.

In the fifth step S35, the third rubber strip GS3 is wound and superposed in the same manner as in the fifth step S15 shown in FIG. 5. The third rubber strip GS3 is wound from the outer circumferential surface of the base layer 1 to the outer circumferential surface of the electrically-conductive layer 4. Accordingly, a second cap layer 32 is formed along the outer circumferential surfaces of the base layer 1 and the electrically-conductive layer 4.

In the tread rubber forming method S3, the tread rubber 10 including the electrically-conductive layer 4 and three rubber layers which are the base layer 1, the intermediate layer 2, and the cap layer 3, is efficiently formed in a jointless manner.

It is desirable that the length W2 (see FIG. 8) in the axial direction of the first intermediate layer 21 formed in the second step S32 is 60% to 80% of the length W1 (see FIG. 9) in the axial direction of the tread rubber 10. If the length W2 is not smaller than 60% of the length W1, the rubber volume of the first intermediate layer 21 increases, and the low fuel consumption performance of a tire in which the tread rubber 10 is used is improved. Meanwhile, if the length W2 is not larger than 80% of the length W1, the electrically-conductive layer 4 is exposed from the tread surface near the equator CL of the tread rubber 10, and the electrical conduction effect is improved.

The desirable winding direction of the second rubber strip GS2, the third rubber strip GS3, and the fourth rubber strip GS4 in the second step S32 to the fifth step S35 of the tread rubber forming method S3, is the same as the desirable winding direction of the second rubber strip GS2, the third rubber strip GS3, and the fourth rubber strip GS4 in the second step S12 to the fifth step S15 of the tread rubber forming method S1.

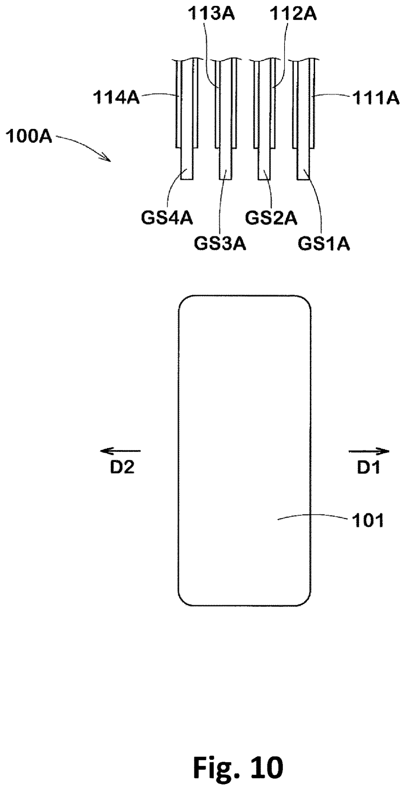

FIG. 10 shows a tread rubber forming device 100A which is a modification of the tread rubber forming device 100. As portions of the tread rubber forming device 100A that are not described below, the corresponding components of the above-described tread rubber forming device 100 can be used.

The tread rubber forming device 100A includes: the cylindrical body 101 serving as a base for forming thereon the tread rubber 10; and a first applicator 111A, a second applicator 112A, a third applicator 113A, and a fourth applicator 114A for supplying rubber strips GS1A, GS2A, GS3A, and GS4A.

The first applicator 111A supplies the first rubber strip GS1A to form the base layer 1. The first rubber strip GS1A is formed of an electrically-conductive ingredient equivalent to that of the first rubber strip GS1. The second applicator 112A supplies the second rubber strip GS2A to form the intermediate layer 2. The second rubber strip GS2A is formed of a non-electrically-conductive ingredient equivalent to that of the second rubber strip GS2. The third applicator 113A supplies the third rubber strip GS3A to form the electrically-conductive layer 4. The third rubber strip GS3A is formed of an electrically-conductive ingredient equivalent to that of the fourth rubber strip GS4.

The fourth applicator 114A supplies the fourth rubber strip GS4A to form the cap layer 3. The fourth rubber strip GS4A is formed of a non-electrically-conductive ingredient equivalent to that of the third rubber strip GS3.

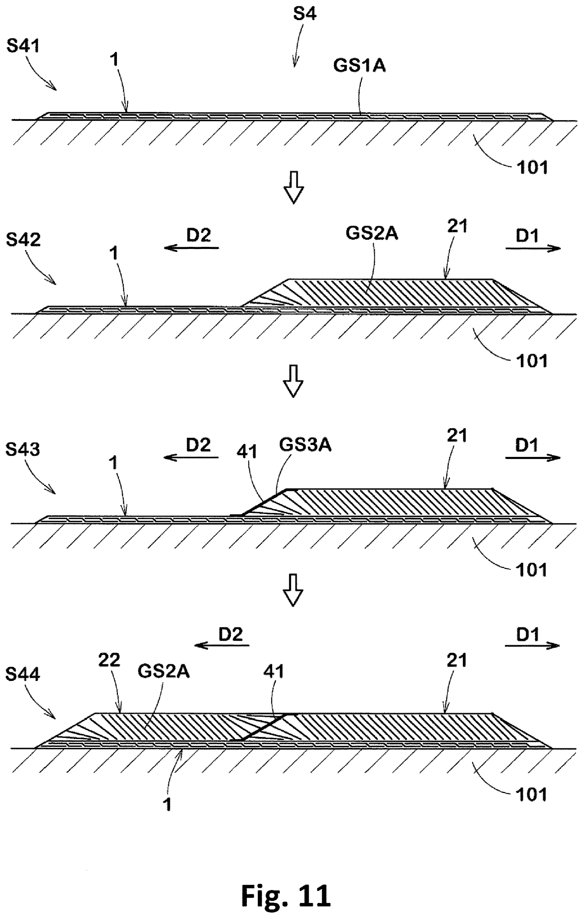

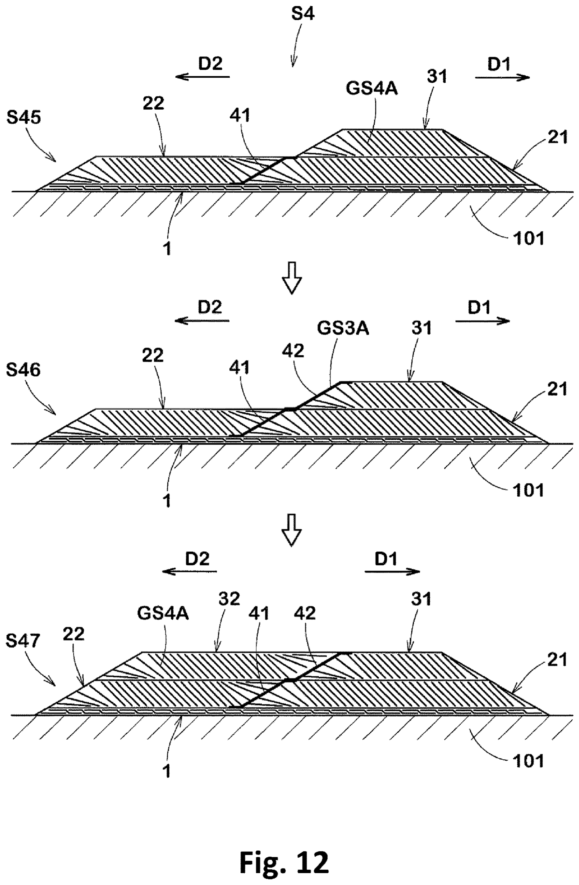

FIG. 11 and FIG. 12 show, in time series, steps of a tread rubber forming method S4 which is still another modification of the tread rubber forming method S1 not forming an embodiment. The present tread rubber forming method S4 is executed by using the tread rubber forming device 100A. The present tread rubber forming method S4 includes a first step S41 to a seventh step S47.

As shown in FIG. 11, in the first step S41, the first applicator 111A winds and superposes the first rubber strip GS1A while moving the first rubber strip GS1A in the axial direction of the cylindrical body 101. By the first step S41, a base layer 1 is formed along the outer circumferential surface of the cylindrical body 101.

In the second step S42, the second applicator 112A winds and superposes the second rubber strip GS2A on a portion of the outer circumferential surface of the base layer 1 while moving the second rubber strip GS2A in the axial direction of the cylindrical body 101. By the second step S42, a first intermediate layer 21 is formed along the outer circumferential surface of the base layer 1.

In the third step S43, the third applicator 113A winds the third rubber strip GS3A on the second axial direction D2 side of the cylindrical body 101 relative to the first intermediate layer 21. The third rubber strip GS3A is wound from the position of contact with the base layer 1 to the outer circumferential surface of the first intermediate layer 21. By the third step S43, a first electrically-conductive layer 41 is formed inside the tread portion. The first electrically-conductive layer 41 is a portion of the electrically-conductive layer 4.

In the fourth step S44, the second applicator 112A winds and superposes, on the outer circumferential surfaces of the base layer 1 and the first electrically-conductive layer 41, the second rubber strip GS2A on the second axial direction D2 side of the cylindrical body 101 relative to the first electrically-conductive layer 41 while moving the second rubber strip GS2A in the axial direction of the cylindrical body 101. In the fourth step S44, the second rubber strip GS2A is wound and superposed such that a portion of the first electrically-conductive layer 41 is exposed to the outer side in the radial direction of the second rubber strip GS2A. By the fourth step S44, a second intermediate layer 22 is formed along the outer circumferential surface of the base layer 1.

In the fifth step S45, the fourth applicator 114A winds and superposes the fourth rubber strip GS4A on the outer circumferential surface of the first intermediate layer 21 while moving the fourth rubber strip GS4A in the axial direction of the cylindrical body 101. In the fifth step S45, the fourth rubber strip GS4A is wound and superposed so as to avoid the outer circumferential surface of the first electrically-conductive layer 41. Accordingly, the outer circumferential surface of the first electrically-conductive layer 41 is kept exposed. By the fifth step S45, a first cap layer 31 is formed along the outer circumferential surface of the first intermediate layer 21.

In the sixth step S46, the third applicator 113A winds the third rubber strip GS3A on the second axial direction D2 side of the cylindrical body relative to the first cap layer 31. The third rubber strip GS3A is wound on the outer circumferential surface of the first cap layer 31 from the position of contact with the first electrically-conductive layer 41 so as to be exposed to the outer side in the radial direction of the tread rubber 10. By the sixth step S46, a second electrically-conductive layer 42 exposed from the tread surface of the tread portion is formed. The second electrically-conductive layer 42 is a portion of the electrically-conductive layer 4.

The first electrically-conductive layer 41 and the second electrically-conductive layer 42 are in contact with each other inside the tread rubber 10. Therefore, the electrically-conductive layer 4 for causing conduction between the tread surface and the base layer 1 of the tread portion is formed by the first electrically-conductive layer 41 and the second electrically-conductive layer 42.

By the seventh step S47, the fourth applicator 114A winds and superposes the fourth rubber strip GS4A on the second axial direction D2 side relative to the second electrically-conductive layer 42 while moving the fourth rubber strip GS4A in the axial direction of the cylindrical body 101. The fourth rubber strip GS4A is wound on the outer circumferential surfaces of the second intermediate layer 22 and the second electrically-conductive layer 42 such that a portion of the second electrically-conductive layer 42 is exposed to the outer side in the radial direction of the tread rubber 10. By the seventh step S47, a second cap layer 32 is formed along the outer circumferential surface of the first intermediate layer 21 .

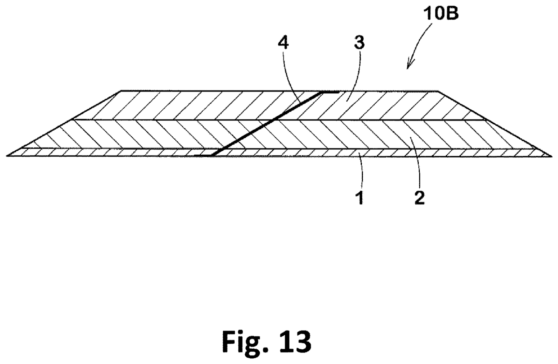

FIG. 13 shows a tread rubber 10B, not forming an embodiment, which is a modification of the tread rubber 10. The tread rubber 10B is configured such that the electrically-conductive layer 4 penetrates the base layer 1 so as to reach the inner circumferential surface of the tread rubber 10B. Therefore, in the tread rubber 10B, the first rubber strip GS1 to form the base layer 1 may be formed of a non-electrically-conductive ingredient.

The tread rubber 10B is formed by using the tread rubber forming device 100 or the tread rubber forming device 100A.

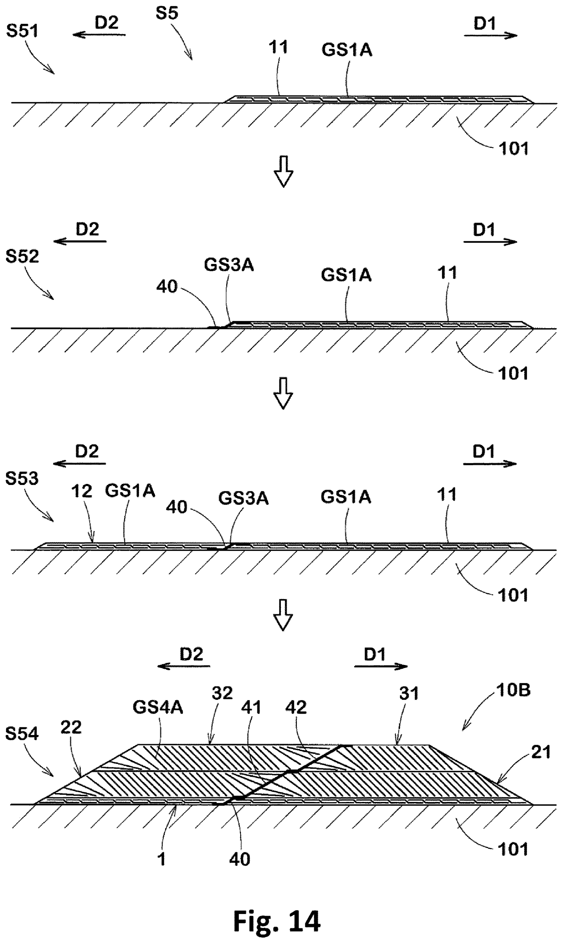

FIG. 14 shows a tread rubber forming method S5, which does not comprise an embodiment, for forming the tread rubber 10B having a structure in which the electrically-conductive layer 4 penetrates the base layer 1. The tread rubber forming method S5 is executed by using the tread rubber forming device 100 or the tread rubber forming device 100A.

Although the mode in which the tread rubber forming method S5 is executed by using the tread rubber forming device 100A will be described hereinafter, the tread rubber forming method S5 can be executed also in the case of using the tread rubber forming device 100, with appropriate replacement and application of the rubber strips and the like. The tread rubber forming method S5 includes a step S51 to a step S54.

As shown in FIG. 14, in the step S51, the first applicator 111A winds and superposes the first rubber strip GS1A on a portion of the outer circumferential surface of the cylindrical body 101 (in FIG. 14, in a region on the substantially right half) while moving the first rubber strip GS1A in the axial direction of the cylindrical body 101. By the step S53, a first base layer 11 is formed along the outer circumferential surface of the cylindrical body 101.

In the step S52, the third applicator 113A winds the third rubber strip GS3A on the second axial direction D2 side of the cylindrical body 101 relative to the first base layer 11. The third rubber strip GS3A is wound from the position of contact with the outer circumferential surface of the cylindrical body 101 to the outer circumferential surface of the first base layer 11. By the step S52, an electrically-conductive layer 40 is formed inside the tread portion. The electrically-conductive layer 40 is a portion of the electrically-conductive layer 4.

In the step S53, the first applicator 111A winds and superposes, on the outer circumferential surface of the cylindrical body 101, the first rubber strip GS1A on the second axial direction D2 side of the cylindrical body 101 relative to the electrically-conductive layer 40 while moving the first rubber strip GS1A in the axial direction of the cylindrical body 101. In the step S53, the first rubber strip GS1A is wound and superposed such that a portion of the electrically-conductive layer 40 is exposed to the outer side in the radial direction of the first rubber strip GS1A. By the steps S51 to S53, the base layer 1 and the electrically-conductive layer 40 penetrating the base layer 1 are formed.

Then, in the step S54, a first intermediate layer 21, a first electrically-conductive layer 41, a second intermediate layer 22, a first cap layer 31, a second electrically-conductive layer 42, and a second cap layer 32 are formed in the same manner as in the tread rubber forming method S4.

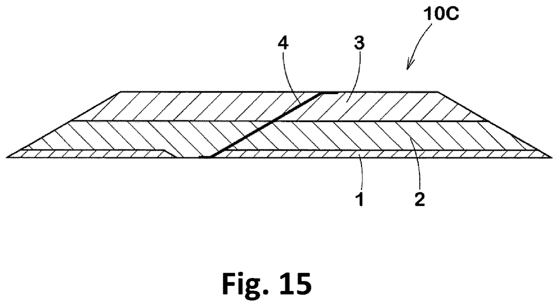

FIG. 15 shows a tread rubber 10C which is another modification of the tread rubber 10, which does not form an embodiment. The tread rubber 10C is configured such that the intermediate layer 2 and the electrically-conductive layer 4 penetrate the base layer 1 so as to reach the inner circumferential surface of the tread rubber 10C. Therefore, also in the tread rubber 10C, the first rubber strip GS1 to form the base layer 1 may be formed of a non-electrically-conductive ingredient. The tread rubber 10C may be configured such that only the electrically-conductive layer 4 penetrates the base layer 1 so as to reach the inner circumferential surface of the tread rubber 10C.

The tread rubber 10C is formed by using the tread rubber forming device 100 or the tread rubber forming device 100A.

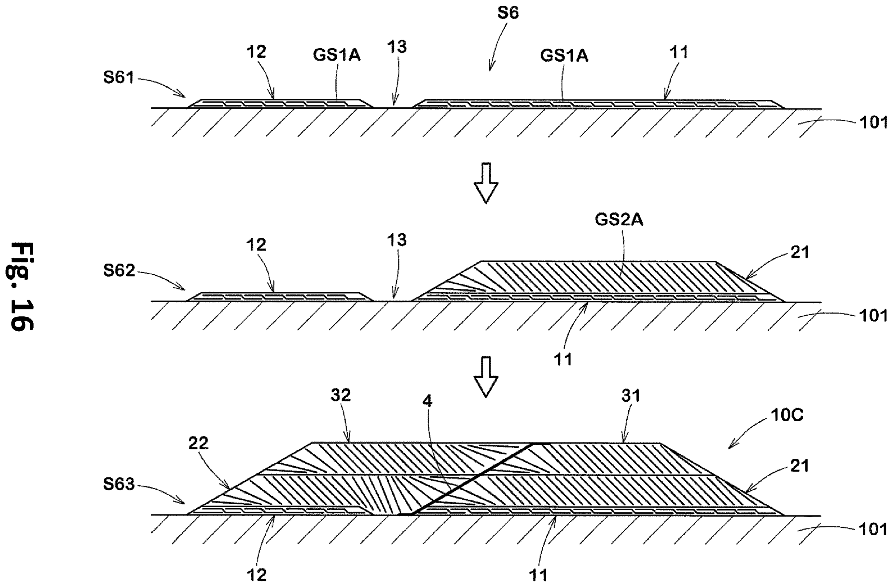

FIG. 16 shows a tread rubber forming method S6, which does not comprise an embodiment, for forming the tread rubber 10C having a structure in which the intermediate layer 2 and the electrically-conductive layer 4 penetrate the base layer 1. The tread rubber forming method S6 is executed by using the tread rubber forming device 100 or the tread rubber forming device 100A.

Although the mode in which the tread rubber forming method S6 is executed by using the tread rubber forming device 100A will be described hereinafter, the tread rubber forming method S6 can be executed also in the case of using the tread rubber forming device 100, with appropriate replacement and application of the rubber strips and the like. The tread rubber forming method S6 includes a step S61 to a step S64.

As shown in FIG. 16, in the step S61, the first applicator 111A winds and superposes the first rubber strip GS1A on the outer circumferential surface of the cylindrical body 101 while moving the first rubber strip GS1A in the axial direction of the cylindrical body 101. In the step S61, a first base layer 11 and a second base layer 12 which are not contiguous to each other in the axial direction of the cylindrical body 101 are formed. For a discontinuity region between the first base layer 11 and the second base layer 12, the first rubber strip GS1A is wound at a winding pitch that is larger than the width of the first rubber strip GS1A. Accordingly, the first base layer 11 and the second base layer 12 are formed on the outer side in the radial direction of the cylindrical body 101, and a separation portion 13 separating adjacent portions of the first rubber strip GS1A in the axial direction of the cylindrical body 101 is formed between the first base layer 11 and the second base layer 12. A base layer 1 is formed by the first base layer 11 and the second base layer 12.

In the step S62, the second applicator 112A winds and superposes the second rubber strip GS2A on the outer circumferential surface of the first base layer 11 while moving the second rubber strip GS2A in the axial direction of the cylindrical body 101. By the step S62, a first intermediate layer 21 is formed along the outer circumferential surface of the first base layer 11 .

In the subsequent step S63, a first electrically-conductive layer 41, a second intermediate layer 22, a first cap layer 31, a second electrically-conductive layer 42, and a second cap layer 32 are formed in the same manner as in the tread rubber forming method S4.

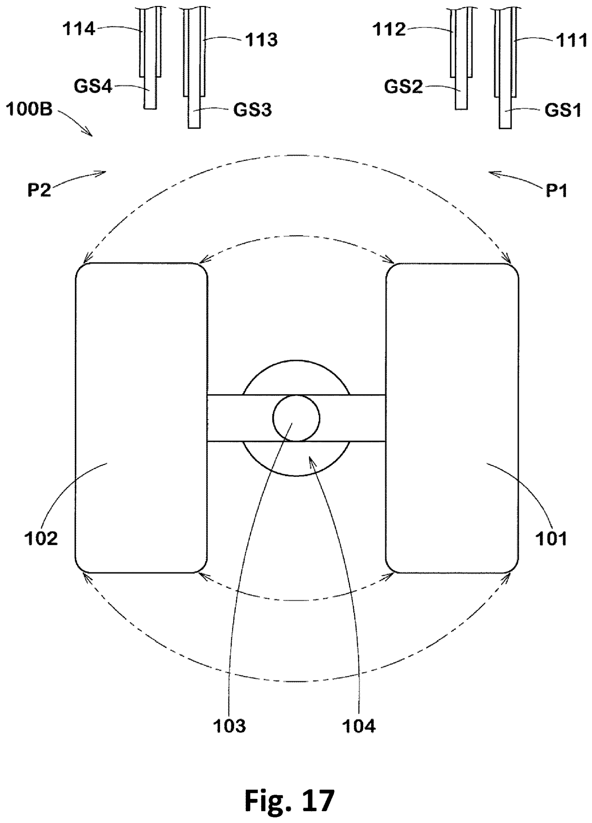

FIG. 17 shows a tread rubber forming device 100B which is a modification of the tread rubber forming device 100. As portions of the tread rubber forming device 100B that are not described below, the corresponding components of the above-described tread rubber forming device 100 can be used.

The tread rubber forming device 100B includes: a pair of cylindrical bodies 101 and 102 serving as bases for forming thereon tread rubbers 10; and the first applicator 111, the second applicator 112, the third applicator 113, and the fourth applicator 114 for supplying the rubber strips GS1, GS2, GS3, and GS4.

The cylindrical bodies 101 and 102 of the present embodiment are arranged parallel to each other and are configured to be rotatable around a revolving shaft 103. The manner of the movement of the cylindrical bodies 101 and 102 is not limited to rotation. As an exemplary manner, the cylindrical bodies 101 and 102 may slide in the axial direction thereof or a radial direction perpendicular to the axial direction. In this case, rotational motions of the cylindrical bodies 101 and 102 described later are replaced by sliding motions.

The cylindrical bodies 101 and 102 are each exclusively disposed at a first position P1 or a second position P2. In FIG. 17, the cylindrical body 101 is located at the first position P1, and the cylindrical body 102 is located at the second position P2. The tread rubber forming device 100B includes a movement portion 104 for moving the cylindrical bodies 101 and 102.

The movement portion 104 moves the cylindrical bodies 101 and 102, to mutually exchange the cylindrical bodies 101 and 102 disposed at the respective positions P1 and P2. More specifically, the movement portion 104 drives the revolving shaft 103, to rotate the cylindrical bodies 101 and 102. If the cylindrical bodies 101 and 102 are rotated by, for example, 180° from the state in FIG. 17, the cylindrical body 101 is located at the second position P2, and the cylindrical body 102 is located at the first position P1. If the cylindrical bodies 101 and 102 are further rotated by 180° (-180°), the cylindrical bodies 101 and 102 return to the state in FIG. 17. It is noted that the rotation angles of the cylindrical bodies 101 and 102 are not limited to 180° but can be changed according to the specifications of the tread rubber forming device 100B or the like.

The first applicator 111 to the fourth applicator 114 and the like are configured to be movable in the axial direction of each of the cylindrical bodies 101 and 102. The cylindrical bodies 101 and 102 may each be configured to be movable in the axial direction thereof. In addition, the first applicator 111 to the fourth applicator 114 and the like may be configured, as necessary, to be movable in a front-rear direction perpendicular to the axial direction of each of the cylindrical bodies 101 and 102.

Rotation of the cylindrical bodies 101 and 102 by the movement portion 104 is controlled by a control section. The control section synchronously controls the first applicator 111 and the like, the cylindrical bodies 101 and 102, and the movement portion 104. Although the mode in which the first applicator 111 and the like are movable in the axial direction will be described hereinafter, the same description applies also to the mode in which the cylindrical bodies 101 and 102 are each movable in the axial direction.

The first applicator 111 and the second applicator 112 are arranged at positions corresponding to the first position P1. The phrase "arranged at positions corresponding to the first position P1" means that they are arranged at positions that allow the rubber strips to be supplied to the cylindrical body 101 or 102 located at the first position P1.

The third applicator 113 and the fourth applicator 114 are arranged at positions corresponding to the second position P2. The phrase "arranged at positions corresponding to the second position P2" means that they are arranged at positions that allow the rubber strips to be supplied to the cylindrical body 102 or 101 located at the second position P2.

The above-described arrangement of the first applicator 111 to the fourth applicator 114 allows the rubber strips to be wound at the first position P1 and the second position P2 at the same time. For example, winding of the first rubber strip GS1 at the first position P1 and winding of the third rubber strip GS3 at the second position P2 can be performed at the same time. In addition, winding of the second rubber strip GS2 at the first position P1 and winding of the fourth rubber strip GS4 at the second position P2 can be performed at the same time. Accordingly, manufacturing efficiency for the tread rubber 10 is improved.

The tread rubber forming device 100B is suitably used for executing the tread rubber forming methods S1 to S3.

In the case where the tread rubber forming device 100B is used for executing the tread rubber forming method S1, the cylindrical bodies 101 and 102 are rotated after the second step S12 so that the cylindrical bodies 101 and 102 disposed at the positions P1 and P2 are exchanged with each other. In addition, the cylindrical bodies 101 and 102 are rotated after the fourth step S14 so that the cylindrical bodies 101 and 102 disposed at the positions P1 and P2 are exchanged with each other. Furthermore, the cylindrical bodies 101 and 102 are rotated after the step S14B so that the cylindrical bodies 101 and 102 disposed at the positions P1 and P2 are exchanged with each other.

In the case where the tread rubber forming device 100B is used for executing the tread rubber forming method S2, the cylindrical bodies 101 and 102 are rotated after the second step S22 so that the cylindrical bodies 101 and 102 disposed at the positions P1 and P2 are exchanged with each other.

In the case where the tread rubber forming device 100B is used for executing the tread rubber forming method S3, the cylindrical bodies 101 and 102 are rotated after the second step S32 so that the cylindrical bodies 101 and 102 disposed at the positions P1 and P2 are exchanged with each other.

In the tread rubber forming methods S2 and S3 using the tread rubber forming device 100B, the number of times of the exchange between the cylindrical bodies 101 and 102 disposed at the positions P1 and P2 is smaller than in the tread rubber forming method S1 using the tread rubber forming device 100B. Therefore, in the tread rubber forming methods S2 and S3, the tread rubber 10 including the electrically-conductive layer 4 and three rubber layers which are the base layer 1, the intermediate layer 2, and the cap layer 3, is more efficiently formed in a jointless manner.

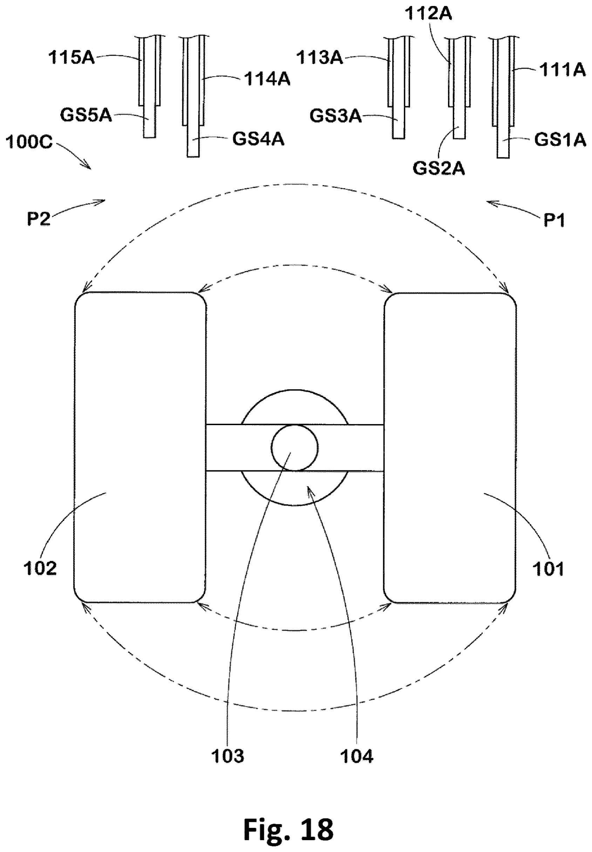

FIG. 18 shows a tread rubber forming device 100C which is a modification of the tread rubber forming device 100. As portions of the tread rubber forming device 100C that are not described below, the corresponding components of the above-described tread rubber forming device 100A can be used.

The tread rubber forming device 100C includes: the pair of cylindrical bodies 101 and 102 serving as bases for forming thereon the tread rubbers 10; and the first applicator 111A, the second applicator 112A, the third applicator 113A, the fourth applicator 114A, and a fifth applicator 115A for supplying the rubber strips GS1A, GS2A, GS3A, and GS4A, and a rubber strip GS5A.

The fifth applicator 115A supplies the fifth rubber strip GS5A to form the electrically-conductive layer 4. The fifth rubber strip GS5A is formed of an electrically-conductive ingredient equivalent to that of the third rubber strip GS3A. The fifth rubber strip GS5A may be formed of an ingredient different from that of the third rubber strip GS3A.

The first applicator 111A, the second applicator 112A, and the third applicator 113A are arranged at positions corresponding to the first position P1. The fourth applicator 114A and the fifth applicator 115A are arranged at positions corresponding to the second position P2.

The above-described arrangement of the first applicator 111A to the fifth applicator 115A allows the rubber strips to be wound at the first position P1 and the second position P2 at the same time. For example, winding of the first rubber strip GS1A at the first position P1 and winding of the fourth rubber strip GS4A at the second position P2 can be performed at the same time. In addition, winding of the second rubber strip GS2A at the first position P1 and winding of the fourth rubber strip GS4A at the second position P2 can be performed at the same time. Accordingly, manufacturing efficiency for the tread rubber 10 is improved.

The tread rubber forming device 100C is suitably used for executing the tread rubber forming methods S4 to S6.

In the case where the tread rubber forming device 100C is used for executing the tread rubber forming method S4, the cylindrical bodies 101 and 102 are rotated after the fourth step S44 so that the cylindrical bodies 101 and 102 disposed at the positions P1 and P2 are exchanged with each other.

In the tread rubber forming method S4 using the tread rubber forming device 100C, the number of times of the exchange between the cylindrical bodies 101 and 102 disposed at the positions P1 and P2 is smaller than in the tread rubber forming method S1 using the tread rubber forming device 100B. Therefore, in the tread rubber forming method S4, the tread rubber 10 including the electrically-conductive layer 4 and three rubber layers which are the base layer 1, the intermediate layer 2, and the cap layer 3, is more efficiently formed in a jointless manner.

It is noted that although the tread rubber forming devices 100B and 100C each including the pair of cylindrical bodies 101 and 102 have been shown as desirable embodiments in FIG. 17 and FIG. 18, the tread rubber forming device according to the present invention may include three or more cylindrical bodies (for example, cylindrical bodies, the number of which is not smaller than the number of the applicators).

In the tread rubber forming devices 100B and 100C, the manner of the movement of the cylindrical bodies 101 and 102 is not limited to rotation. As an exemplary manner, the cylindrical bodies 101 and 102 may slide in the axial direction thereof or a radial direction perpendicular to the axial direction. In this case, the rotational motions of the cylindrical bodies 101 and 102 are replaced by sliding motions.

Although the tread rubber forming methods S1 to S6 and the tread rubber forming devices 100 to 100C according to the present invention have been described in detail, the present invention is not limited to the above-described specific embodiments, but only by the scope of the appended claims.

## Claims

1. A tread rubber forming method (S2) for spirally winding and superposing tape-shaped unvulcanized rubber strips (GS1, GS2, GS3, and GS4) on an outer side in a radial direction of a cylindrical body (101) to form an annular tread rubber (10), the method (S2) comprising:
a first step (S21) of winding and superposing a first rubber strip (GS1) while moving the first rubber strip (GS1) in an axial direction of the cylindrical body (101), to form a base layer (1);
a second step (S22) of winding and superposing a non-electrically-conductive second rubber strip (GS2) in a region on one side in the axial direction on an outer circumferential surface of the base layer (1) while moving the second rubber strip (GS2) in the axial direction, to form a first intermediate layer (21), wherein the second step (S22) includes winding the second rubber strip (GS2) at a winding pitch that is larger than a width of the second rubber strip (GS2), to form a separation portion (23) separating adjacent portions of the second rubber strip (GS2) in the axial direction;
a third step (S23) of winding and superposing a non-electrically-conductive third rubber strip (GS3) on an outer circumferential surface of the first intermediate layer (21) while moving the third rubber strip (GS3) in the axial direction, to form a first cap layer (31);
a fourth step (S24) of winding, in a region on another side in the axial direction relative to the first intermediate layer (21) and the first cap layer (31), an electrically-conductive fourth rubber strip (GS4) from a position of contact with the base layer (1) to an outer circumferential surface of the first cap layer (31), to form an electrically-conductive layer (4), wherein the fourth step (S24) includes winding the fourth rubber strip (GS4) in a region that includes the separation portion (23); and
a fifth step (S25) of winding and superposing, on an outer side in the radial direction of the base layer (1), the third rubber strip (GS3) in a region on the other side in the axial direction relative to the electrically-conductive layer (4) while moving the third rubber strip (GS3) in the axial direction, such that a portion of the electrically-conductive layer (4) is exposed to an outer side in the radial direction of the tread rubber (10), to form a second cap layer (32).

2. The tread rubber forming method (S2) according to claim 1, wherein the fifth step (S25) includes winding the third rubber strip (GS3) in a region that includes the separation portion (23).

3. A tread rubber forming method (S3) for spirally winding and superposing tape-shaped unvulcanized rubber strips (GS1, GS2, GS3, and GS4) on an outer side in a radial direction of a cylindrical body (101) to form an annular tread rubber (10), the method (S3) comprising:
a first step (S31) of winding and superposing a first rubber strip (GS1) while moving the first rubber strip (GS1) in an axial direction of the cylindrical body (101), to form a base layer (1);
a second step (S32) of winding and superposing a non-electrically-conductive second rubber strip (GS2) in a region on one side in the axial direction on an outer circumferential surface of the base layer (1) while moving the second rubber strip (GS2) in the axial direction, to form a first intermediate layer (21), wherein the second step (S32) includes winding and superposing the second rubber strip (GS2) such that an edge (21e), on the other side in the axial direction, of the first intermediate layer (21) is located on the other side relative to an equator (CL) of the tread rubber (10);
a third step (S33) of winding and superposing a non-electrically-conductive third rubber strip (GS3) on an outer circumferential surface of the first intermediate layer (21) while moving the third rubber strip (GS3) in the axial direction, to form a first cap layer (31);
a fourth step (S34) of winding, in a region on another side in the axial direction relative to the first intermediate layer (21) and the first cap layer (31), an electrically-conductive fourth rubber strip (GS4) from a position of contact with the base layer (1) to an outer circumferential surface of the first cap layer (31), to form an electrically-conductive layer (4); and
a fifth step (S35) of winding and superposing, on an outer side in the radial direction of the base layer (1), the third rubber strip (GS3) in a region on the other side in the axial direction relative to the electrically-conductive layer (4) while moving the third rubber strip (GS3) in the axial direction, such that a portion of the electrically-conductive layer (4) is exposed to an outer side in the radial direction of the tread rubber (10), to form a second cap layer (32).

4. The tread rubber forming method (S3) according to claim 3, wherein a length W2 in the axial direction of the first intermediate layer (21) formed in the second step (S32) is 60% to 80% of a length W1 in the axial direction of the tread rubber (10).

5. A tread rubber forming device (100, 100B) that spirally winds and superposes tape-shaped unvulcanized rubber strips (GS1, GS2, GS3, and GS4) to form an annular tread rubber (10) according to the method of any one of claims 1 to 4, the device (100, 100B) comprising:
a first applicator (111) configured to wind and superpose the first rubber strip (GS1) while moving the first rubber strip (GS1) in an axial direction of the tread rubber (10), to form the base layer (1);
a second applicator (112) configured to wind and superpose the non-electrically-conductive second rubber strip (GS2) in a region on one side in the axial direction on an outer circumferential surface of the base layer (1) while moving the second rubber strip (GS2) in the axial direction, to form the first intermediate layer (21);
a third applicator (113) configured to wind and superpose the non-electrically-conductive third rubber strip (GS3) on an outer circumferential surface of the first intermediate layer (21) while moving the third rubber strip (GS3) in the axial direction, to form the first cap layer (31); and
a fourth applicator (114) configured to wind, in a region on another side in the axial direction relative to the first intermediate layer (21) and the first cap layer (31), the electrically-conductive fourth rubber strip (GS4) from a position of contact with the base layer (1) to an outer circumferential surface of the first cap layer (31), to form the electrically-conductive layer (4).

6. The tread rubber forming device (100, 100B) according to claim 5, wherein the third applicator (113) winds and superposes, on an outer side in a radial direction of the base layer (1) and the electrically-conductive layer (4), the third rubber strip (GS3) in a region on the other side in the axial direction relative to the electrically-conductive layer (4) while moving the third rubber strip (GS3) in the axial direction, such that a portion of the electrically-conductive layer (4) is exposed to an outer side in the radial direction of the tread rubber (10), to form a second cap layer (32).

7. The tread rubber forming device (100, 100B) according to claim 6, wherein the second applicator (112) winds and superposes, on the outer circumferential surface of the base layer (1) and an outer circumferential surface of the electrically-conductive layer (4), the second rubber strip (GS2) in a region on the other side in the axial direction relative to the electrically-conductive layer (4) while moving the second rubber strip (GS2) in the axial direction, such that a portion of the electrically-conductive layer (4) is exposed to an outer side in the radial direction of the second rubber strip (GS2), to form a second intermediate layer (22).

8. The tread rubber forming device (100B) according to any one of claims 5 to 7, further comprising:
a pair of cylindrical bodies (101 and 102) which are each exclusively disposed at a first position (P1) or a second position (P2) and on which the rubber strips (GS1, GS2, GS3, and GS4) are wound; and
a movement portion (104) configured to move the cylindrical bodies (101 and 102), to mutually exchange the cylindrical bodies (101 and 102) disposed at the respective positions (P1 and P2), wherein
the first applicator (111) and the second applicator (112) are arranged at positions corresponding to the first position (P1), and
the third applicator (113) and the fourth applicator (114) are arranged at positions corresponding to the second position (P2).

9. A tread rubber forming device (100C) that spirally winds and superposes tape-shaped unvulcanized rubber strips (GS1A, GS2A, GS3A, GS4A, and GS5A) to form an annular tread rubber (10), the device (100C) comprising:
a first applicator (111A) configured to wind and superpose a first rubber strip (GS1A) while moving the first rubber strip (GS1A) in an axial direction of the tread rubber (10), to form a base layer (1);
a second applicator (112A) configured to wind and superpose a non-electrically-conductive second rubber strip (GS2A) on an outer circumferential surface of the base layer (1) while moving the second rubber strip (GS2A) in the axial direction, to form an intermediate layer (2);
a third applicator (113A) configured to wind an electrically-conductive third rubber strip (GS3A) from a position of contact with the base layer (1) to an outer circumferential surface of the intermediate layer (2), to form a first electrically-conductive layer (41);
a fourth applicator (114A) configured to wind and superpose a non-electrically-conductive fourth rubber strip (GS4A) on the outer circumferential surface of the intermediate layer (2) while moving the fourth rubber strip (GS4A) in the axial direction, to form a cap layer (3); and
a fifth applicator (115A) configured to wind an electrically-conductive fifth rubber strip (GS5A) from a position of contact with the first electrically-conductive layer (41) to an outer circumferential surface of the cap layer (3), to form a second electrically-conductive layer (42).

10. The tread rubber forming device (100C) according to claim 9, wherein
the second applicator (112A) winds and superposes the second rubber strip (GS2A) in a region on one side in the axial direction on the outer circumferential surface of the base layer (1), to form a first intermediate layer (21),
the third applicator (113A) winds, to an outer circumferential surface of the first intermediate layer (21), the third rubber strip (GS3A) in a region on another side in the axial direction relative to the first intermediate layer (21), to form the first electrically-conductive layer (41), and
the second applicator (112A) winds and superposes the second rubber strip (GS2A) on the outer circumferential surface of the base layer (1) and an outer circumferential surface of the first electrically-conductive layer (41) such that a portion of the first electrically-conductive layer (41) is exposed to an outer side in a radial direction of the second rubber strip (GS2A), to form a second intermediate layer (22).

11. The tread rubber forming device (100C) according to claim 10, wherein
the fourth applicator (114A) winds and superposes the fourth rubber strip (GS4A) on a portion of the outer circumferential surface of the first intermediate layer (21), to form a first cap layer (31),
the fifth applicator (115A) winds, to the outer circumferential surface of the intermediate layer (2), the fifth rubber strip (GS5A) in a region on the other side in the axial direction relative to the first cap layer (31), to form the second electrically-conductive layer (42), and
the fourth applicator (114A) winds and superposes the fourth rubber strip (GS4A) on the outer circumferential surface of the intermediate layer (2) and an outer circumferential surface of the second electrically-conductive layer (42) such that a portion of the second electrically-conductive layer (42) is exposed to an outer side in the radial direction of the fourth rubber strip (GS4A), to form a second cap layer (32).

12. The tread rubber forming device (100C) according to any one of claims 9 to 11, further comprising:
a pair of cylindrical bodies (101 and 102) which are each exclusively disposed at a first position (P1) or a second position (P2) and on which the rubber strips (GS1A, GS2A, GS3A, GS4A, and GS5A) are wound; and
a movement portion (104) configured to move the cylindrical bodies (101 and 102), to mutually exchange the cylindrical bodies (101 and 102) disposed at the respective positions (P1 and P2), wherein
the first applicator (111A) to the third applicator (113A) are arranged at positions corresponding to the first position (P1), and
the fourth applicator (114A) and the fifth applicator (115A) are arranged at positions corresponding to the second position (P2).

## Patentansprüche

1. Laufflächengummiausbildungsverfahren (S2) zum spiralförmigen Wickeln und Überlagern von bandförmigen unvulkanisierten Gummistreifen (GS1, GS2, GS3 und GS4) auf einer Außenseite in einer radialen Richtung eines zylindrischen Körpers (101), um einen ringförmigen Laufflächengummi (10) auszubilden, das Verfahren (S2) umfassend:
einen ersten Schritt (S21) des Wickelns und Überlagerns eines ersten Gummistreifens (GS1), während der erste Gummistreifen (GS1) in der axialen Richtung des zylindrischen Körpers (101) bewegt wird, um eine Basisschicht (1) auszubilden;
einen zweiten Schritt (S22) des Wickelns und Überlagerns eines nicht elektrisch leitfähigen zweiten Gummistreifens (GS2) in einem Bereich auf einer Seite in der axialen Richtung auf einer umlaufenden Außenfläche der Basisschicht (1), während der zweite Gummistreifen (GS2) in der axialen Richtung bewegt wird, um eine erste Zwischenschicht (21) auszubilden, wobei der zweite Schritt (S22) das Wickeln des zweiten Gummistreifens (GS2) mit einer Wickelsteigung einschließt, die größer ist als eine Breite des zweiten Gummistreifens (GS2), um einen Trennabschnitt (23) auszubilden, der benachbarte Abschnitte des zweiten Gummistreifens (GS2) in der axialen Richtung trennt;
einen dritten Schritt (S23) des Wickelns und Überlagerns eines nicht elektrisch leitfähigen dritten Gummistreifens (GS3) auf einer umlaufenden Außenfläche der ersten Zwischenschicht (21), während der dritte Gummistreifen (GS3) in der axialen Richtung bewegt wird, um eine erste Deckschicht (31) auszubilden;
einen vierten Schritt (S24) des Wickelns, in einem Bereich auf einer anderen Seite in der axialen Richtung relativ zu der ersten Zwischenschicht (21) und der ersten Deckschicht (31), eines elektrisch leitfähigen vierten Gummistreifens (GS4) von einer Position eines Kontakts mit der Basisschicht (1) zu einer umlaufenden Außenfläche der ersten Deckschicht (31), um eine elektrisch leitfähige Schicht (4) auszubilden, wobei der vierte Schritt (S24) das Wickeln des vierten Gummistreifens (GS4) in einem Bereich einschließt, der den Trennungsabschnitt (23) einschließt; und
einen fünften Schritt (S25) des Wickelns und Überlagerns, auf einer Außenseite in der radialen Richtung der Basisschicht (1), des dritten Gummistreifens (GS3) in einem Bereich auf der anderen Seite in der axialen Richtung relativ zu der elektrisch leitfähigen Schicht (4), während der dritte Gummistreifen (GS3) in der axialen Richtung bewegt wird, sodass ein Abschnitt der elektrisch leitfähigen Schicht (4) zu einer Außenseite in der radialen Richtung des Laufflächengummis (10) freigelegt wird, um eine zweite Deckschicht (32) auszubilden.

2. Laufflächengummiausbildungsverfahren (S2) nach Anspruch 1, wobei der fünfte Schritt (S25) das Wickeln des dritten Gummistreifens (GS3) in einem Bereich einschließt, der den Trennungsabschnitt (23) einschließt.

3. Laufflächengummiausbildungsverfahren (S3) zum spiralförmigen Wickeln und Überlagern von bandförmigen unvulkanisierten Gummistreifen (GS1, GS2, GS3 und GS4) auf einer Außenseite in einer radialen Richtung eines zylindrischen Körpers (101), um einen ringförmigen Laufflächengummi (10) auszubilden, das Verfahren (S3) umfassend:
einen ersten Schritt (S31) des Wickelns und Überlagerns eines ersten Gummistreifens (GS1), während der erste Gummistreifen (GS1) in der axialen Richtung des zylindrischen Körpers (101) bewegt wird, um eine Basisschicht (1) auszubilden;
einen zweiten Schritt (S32) des Wickelns und Überlagerns eines nicht elektrisch leitfähigen zweiten Gummistreifens (GS2) in einem Bereich auf einer Seite in der axialen Richtung auf einer umlaufenden Außenfläche der Basisschicht (1), während der zweite Gummistreifen (GS2) in der axialen Richtung bewegt wird, um eine erste Zwischenschicht (21) auszubilden, wobei der zweite Schritt (S32) das Wickeln und Überlagern des zweiten Gummistreifens (GS2) einschließt, sodass eine Kante (21e), auf der anderen Seite in der axialen Richtung, der ersten Zwischenschicht (21) sich auf der anderen Seite relativ zu einem Äquator (CL) des Laufflächengummis (10) befindet;
einen dritten Schritt (S33) des Wickelns und Überlagerns eines nicht elektrisch leitfähigen dritten Gummistreifens (GS3) auf einer umlaufenden Außenfläche der ersten Zwischenschicht (21), während der dritte Gummistreifen (GS3) in der axialen Richtung bewegt wird, um eine erste Deckschicht (31) auszubilden;
einen vierten Schritt (S34) des Wickelns, in einem Bereich auf einer anderen Seite in der axialen Richtung relativ zu der ersten Zwischenschicht (21) und der ersten Deckschicht (31), eines elektrisch leitfähigen vierten Gummistreifens (GS4) von einer Position des Kontakts mit der Basisschicht (1) zu einer umlaufenden Außenfläche der ersten Deckschicht (31), um eine elektrisch leitfähige Schicht (4) auszubilden; und
einen fünften Schritt (S35) des Wickelns und Überlagerns, auf einer Außenseite in der radialen Richtung der Basisschicht (1), des dritten Gummistreifens (GS3) in einem Bereich auf der anderen Seite in der axialen Richtung relativ zu der elektrisch leitfähigen Schicht (4), während der dritte Gummistreifen (GS3) in der axialen Richtung bewegt wird, sodass ein Abschnitt der elektrisch leitfähigen Schicht (4) zu einer Außenseite in der radialen Richtung des Laufflächengummis (10) freigelegt wird, um eine zweite Deckschicht (32) auszubilden.

4. Laufflächengummiausbildungsverfahren (S3) nach Anspruch 3, wobei eine Länge W2 in der axialen Richtung der in dem zweiten Schritt (S32) ausgebildeten ersten Zwischenschicht (21) 60 % bis 80 % einer Länge W1 in der axialen Richtung des Laufflächengummis (10) beträgt.

5. Laufflächengummiausbildungsvorrichtung (100, 100B), die bandförmige unvulkanisierte Gummistreifen (GS1, GS2, GS3 und GS4) spiralförmig wickelt und überlagert, um einen ringförmigen Laufflächengummi (10) nach dem Verfahren von einem der Ansprüche 1 bis 4 auszubilden, die Vorrichtung (100, 100B) umfassend:
einen ersten Applikator (111), der konfiguriert ist, um den ersten Gummistreifen (GS1) zu wickeln und zu überlagern, während der erste Gummistreifen (GS1) in einer axialen Richtung des Laufflächengummis (10) bewegt wird, um die Basisschicht (1) auszubilden;
einen zweiten Applikator (112), der konfiguriert ist, um den nicht elektrisch leitfähigen zweiten Gummistreifen (GS2) in einem Bereich auf einer Seite in der axialen Richtung auf einer umlaufenden Außenfläche der Basisschicht (1) zu wickeln und zu überlagern, während der zweite Gummistreifen (GS2) in der axialen Richtung bewegt wird, um die erste Zwischenschicht (21) auszubilden;
einen dritten Applikator (113), der konfiguriert ist, um den nicht elektrisch leitfähigen dritten Gummistreifen (GS3) auf eine umlaufende Außenfläche der ersten Zwischenschicht (21) zu wickeln und zu überlagern, während der dritte Gummistreifen (GS3) in der axialen Richtung bewegt wird, um die erste Deckschicht (31) auszubilden; und
einen vierten Applikator (114), der konfiguriert ist, um in einem Bereich auf einer anderen Seite in der axialen Richtung relativ zu der ersten Zwischenschicht (21) und der ersten Deckschicht (31) den elektrisch leitfähigen vierten Gummistreifen (GS4) von einer Position eines Kontakts mit der Basisschicht (1) zu einer umlaufenden Außenfläche der ersten Deckschicht (31) zu wickeln, um die elektrisch leitfähige Schicht (4) auszubilden.

6. Laufflächengummiausbildungsvorrichtung (100, 100B) nach Anspruch 5, wobei der dritte Applikator (113), auf einer Außenseite in einer radialen Richtung der Basisschicht (1) und der elektrisch leitfähigen Schicht (4), den dritten Gummistreifen (GS3) in einem Bereich auf der anderen Seite in der axialen Richtung relativ zu der elektrisch leitfähigen Schicht (4) wickelt und überlagert, während der dritte Gummistreifen (GS3) in der axialen Richtung bewegt wird, sodass ein Abschnitt der elektrisch leitfähigen Schicht (4) zu einer Außenseite in der radialen Richtung des Laufflächengummis (10) freigelegt wird, um eine zweite Deckschicht (32) auszubilden.

7. Laufflächengummiausbildungsvorrichtung (100, 100B) nach Anspruch 6, wobei der zweite Applikator (112), auf die umlaufende Außenfläche der Basisschicht (1) und eine umlaufende Außenfläche der elektrisch leitfähigen Schicht (4), den zweiten Gummistreifen (GS2) in einem Bereich auf der anderen Seite in axialer Richtung relativ zu der elektrisch leitfähigen Schicht (4) wickelt und überlagert, während der zweite Gummistreifen (GS2) in der axialen Richtung bewegt wird, sodass ein Abschnitt der elektrisch leitfähigen Schicht (4) zu einer Außenseite in der radialen Richtung des zweiten Gummistreifens (GS2) freigelegt wird, um eine zweite Zwischenschicht (22) auszubilden.

8. Laufflächengummivorrichtung (100B) nach einem der Ansprüche 5 bis 7, ferner umfassend:
ein Paar zylindrischer Körper (101 und 102), die jeweils ausschließlich an einer ersten Position (P1) oder einer zweiten Position (P2) angebracht sind und auf die die Gummistreifen (GS1, GS2, GS3 und GS4) gewickelt sind; und
einen Bewegungsabschnitt (104), der konfiguriert ist, um die zylindrischen Körper (101 und 102) zu bewegen, um die zylindrischen Körper (101 und 102), die an den jeweiligen Positionen (P1 und P2) angebracht sind, gegeneinander auszutauschen, wobei
der erste Applikator (111) und der zweite Applikator (112) an Positionen angeordnet sind, die der ersten Position (P1) entsprechen, und
der dritte Applikator (113) und der vierte Applikator (114) an Positionen angeordnet sind, die der zweiten Position (P2) entsprechen.

9. Laufflächengummiausbildungsvorrichtung (100C), die bandförmige unvulkanisierte Gummistreifen (GS1A, GS2A, GS3A, GS4A und GS5A) spiralförmig wickelt und überlagert, um einen ringförmigen Laufflächengummi (10) auszubilden, die Vorrichtung (100C) umfassend:
einen ersten Applikator (111A), der konfiguriert ist, um einen ersten Gummistreifen (GS1A) zu wickeln und zu überlagern, während der erste Gummistreifen (GS1A) in einer axialen Richtung des Laufflächengummis (10) bewegt wird, um eine Basisschicht (1) auszubilden;
einen zweiten Applikator (112A), der konfiguriert ist, um einen nicht elektrisch leitfähigen zweiten Gummistreifen (GS2A) auf eine umlaufende Außenfläche der Basisschicht (1) zu wickeln und zu überlagern, während der zweite Gummistreifen (GS2A) in der axialen Richtung bewegt wird, um eine Zwischenschicht (2) auszubilden;
einen dritten Applikator (113A), der konfiguriert ist, um einen elektrisch leitfähigen dritten Gummistreifen (GS3A) von einer Position eines Kontakts mit der Basisschicht (1) zu einer umlaufenden Außenfläche der Zwischenschicht (2) zu wickeln, um eine erste elektrisch leitfähige Schicht (41) auszubilden;
einen vierten Applikator (114A), der konfiguriert ist, um einen nicht elektrisch leitfähigen vierten Gummistreifen (GS4A) auf die umlaufende Außenfläche der Zwischenschicht (2) zu wickeln und zu überlagern, während der vierte Gummistreifen (GS4A) in der axialen Richtung bewegt wird, um eine Deckschicht (3) auszubilden; und
einen fünften Applikator (115A), der konfiguriert ist, um einen elektrisch leitfähigen fünften Gummistreifen (GS5A) von einer Position eines Kontakts mit der ersten elektrisch leitfähigen Schicht (41) zu einer umlaufenden Außenfläche der Deckschicht (3) zu wickeln, um eine zweite elektrisch leitfähige Schicht (42) auszubilden.

10. Laufflächengummiausbildungsvorrichtung (100C) nach Anspruch 9, wobei
der zweite Applikator (112A) den zweiten Gummistreifen (GS2A) in einem Bereich auf einer Seite in der axialen Richtung auf der umlaufenden Außenfläche der Basisschicht (1) wickelt und überlagert, um eine erste Zwischenschicht (21) auszubilden,
der dritte Applikator (113A), auf eine umlaufende Außenfläche der ersten Zwischenschicht (21), den dritten Gummistreifen (GS3A) in einem Bereich auf einer anderen Seite in der axialen Richtung relativ zu der ersten Zwischenschicht (21) wickelt, um die erste elektrisch leitfähige Schicht (41) auszubilden, und
der zweite Applikator (112A) den zweiten Gummistreifen (GS2A) auf der umlaufenden Außenfläche der Basisschicht (1) und einer umlaufenden Außenfläche der ersten elektrisch leitfähigen Schicht (41) wickelt und überlagert, sodass ein Abschnitt der ersten elektrisch leitfähigen Schicht (41) zu einer Außenseite in einer radialen Richtung des zweiten Gummistreifens (GS2A) freigelegt ist, um eine zweite Zwischenschicht (22) auszubilden.

11. Laufflächengummiausbildungsvorrichtung (100C) nach Anspruch 10, wobei
der vierte Applikator (114A) den vierten Gummistreifen (GS4A) auf einen Abschnitt der umlaufenden Außenfläche der ersten Zwischenschicht (21) wickelt und überlagert, um eine erste Deckschicht (31) auszubilden,
der fünfte Applikator (115A) den fünften Gummistreifen (GS5A) in einem Bereich auf der anderen Seite in der axialen Richtung relativ zu der ersten Deckschicht (31) zu der umlaufenden Außenfläche der Zwischenschicht (2) wickelt, um die zweite elektrisch leitfähige Schicht (42) auszubilden, und
der vierte Applikator (114A) den vierten Gummistreifen (GS4A) auf der umlaufenden Außenfläche der Zwischenschicht (2) und einer umlaufenden Außenfläche der zweiten elektrisch leitfähigen Schicht (42) wickelt und überlagert, sodass ein Abschnitt der zweiten elektrisch leitfähigen Schicht (42) zu einer Außenseite in der radialen Richtung des vierten Gummistreifens (GS4A) freigelegt ist, um eine zweite Deckschicht (32) auszubilden.

12. Laufflächengummiausbildungsvorrichtung (100C) nach einem der Ansprüche 9 bis 11, ferner umfassend:
ein Paar zylindrischer Körper (101 und 102), die jeweils ausschließlich an einer ersten Position (P1) oder einer zweiten Position (P2) angebracht sind und auf die die Gummistreifen (GS1A, GS2A, GS3A, GS4A und GS5A) gewickelt sind; und
einen Bewegungsabschnitt (104), der konfiguriert ist, um die zylindrischen Körper (101 und 102) zu bewegen, um die zylindrischen Körper (101 und 102), die an den jeweiligen Positionen (P1 und P2) angebracht sind, gegeneinander auszutauschen, wobei
der erste Applikator (111A) bis zu dem dritten Applikator (113A) an Positionen angeordnet sind, die der ersten Position (P1) entsprechen, und
der vierte Applikator (114A) und der fünfte Applikator (115A) an Positionen angeordnet sind, die der zweiten Position (P2) entsprechen.

## Revendications

1. Procédé de formation de caoutchouc de bande de roulement (S2) permettant d'enrouler en spirale et de superposer des bandes de caoutchouc non vulcanisé en forme de ruban (GS1, GS2, GS3 et GS4) sur un côté externe dans une direction radiale d'un corps cylindrique (101) pour former un caoutchouc de bande de roulement annulaire (10), le procédé (S2) comprenant :
une première étape (S21) consistant à enrouler et à superposer une première bande de caoutchouc (GS1) tout en déplaçant la première bande de caoutchouc (GS1) dans une direction axiale du corps cylindrique (101), pour former une couche de base (1) ;
une deuxième étape (S22) consistant à enrouler et à superposer une deuxième bande de caoutchouc non électriquement conductrice (GS2) dans une région sur un côté dans la direction axiale sur une surface circonférentielle externe de la couche de base (1) tout en déplaçant la deuxième bande de caoutchouc (GS2) dans la direction axiale, pour former une première couche intermédiaire (21), dans lequel la deuxième étape (S22) comporte l'enroulement de la deuxième bande de caoutchouc (GS2) à un pas d'enroulement qui est plus grand qu'une largeur de la deuxième bande de caoutchouc (GS2), pour former une partie de séparation (23) séparant des parties adjacentes de la deuxième bande de caoutchouc (GS2) dans la direction axiale ;
une troisième étape (S23) consistant à enrouler et à superposer une troisième bande de caoutchouc non électriquement conductrice (GS3) sur une surface circonférentielle externe de la première couche intermédiaire (21) tout en déplaçant la troisième bande de caoutchouc (GS3) dans la direction axiale, pour former une première couche de chape (31) ;
une quatrième étape (S24) consistant à enrouler, dans une région sur un autre côté dans la direction axiale par rapport à la première couche intermédiaire (21) et à la première couche de chape (31), une quatrième bande de caoutchouc électriquement conductrice (GS4) depuis une position de contact avec la couche de base (1) jusqu'à une surface circonférentielle externe de la première couche de chape (31), pour former une couche électriquement conductrice (4), dans lequel la quatrième étape (S24) comporte l'enroulement de la quatrième bande de caoutchouc (GS4) dans une région qui comporte la partie de séparation (23) ; et
une cinquième étape (S25) consistant à enrouler et à superposer, sur un côté externe dans la direction radiale de la couche de base (1), la troisième bande de caoutchouc (GS3) dans une région sur l'autre côté dans la direction axiale par rapport à la couche électriquement conductrice (4) tout en déplaçant la troisième bande de caoutchouc (GS3) dans la direction axiale, de sorte qu'une partie de la couche électriquement conductrice (4) est exposée à un côté externe dans la direction radiale du caoutchouc de bande de roulement (10), pour former une seconde couche de chape (32).

2. Procédé de formation de caoutchouc de bande de roulement (S2) selon la revendication 1, dans lequel la cinquième étape (S25) comporte l'enroulement de la troisième bande de caoutchouc (GS3) dans une région qui comporte la partie de séparation (23).

3. Procédé de formation de caoutchouc de bande de roulement (S3) permettant d'enrouler en spirale et de superposer des bandes de caoutchouc non vulcanisé en forme de ruban (GS1, GS2, GS3 et GS4) sur un côté externe dans une direction radiale d'un corps cylindrique (101) pour former un caoutchouc de bande de roulement annulaire (10), le procédé (S3) comprenant :
une première étape (S31) consistant à enrouler et à superposer une première bande de caoutchouc (GS1) tout en déplaçant la première bande de caoutchouc (GS1) dans une direction axiale du corps cylindrique (101), pour former une couche de base (1) ;
une deuxième étape (S32) consistant à enrouler et à superposer une deuxième bande de caoutchouc non électriquement conductrice (GS2) dans une région sur un côté dans la direction axiale sur une surface circonférentielle externe de la couche de base (1) tout en déplaçant la deuxième bande de caoutchouc (GS2) dans la direction axiale, pour former une première couche intermédiaire (21), dans lequel la deuxième étape (S32) comporte l'enroulement et la superposition de la deuxième bande de caoutchouc (GS2) de telle sorte qu'un bord (21e), sur l'autre côté, dans la direction axiale, de la première couche intermédiaire (21) est située sur l'autre côté par rapport à un équateur (CL) du caoutchouc de bande de roulement (10) ;
une troisième étape (S33) consistant à enrouler et à superposer une troisième bande de caoutchouc non électriquement conductrice (GS3) sur une surface circonférentielle externe de la première couche intermédiaire (21) tout en déplaçant la troisième bande de caoutchouc (GS3) dans la direction axiale, pour former une première couche de chape (31) ;
une quatrième étape (S34) consistant à enrouler, dans une région sur un autre côté dans la direction axiale par rapport à la première couche intermédiaire (21) et à la première couche de chape (31), une quatrième bande de caoutchouc électriquement conductrice (GS4) depuis une position de contact avec la couche de base (1) jusqu'à une surface circonférentielle externe de la première couche de chape (31), pour former une couche électriquement conductrice (4) ; et
une cinquième étape (S35) consistant à enrouler et à superposer, sur un côté externe dans la direction radiale de la couche de base (1), la troisième bande de caoutchouc (GS3) dans une région sur l'autre côté dans la direction axiale par rapport à la couche électriquement conductrice (4) tout en déplaçant la troisième bande de caoutchouc (GS3) dans la direction axiale, de sorte qu'une partie de la couche électriquement conductrice (4) est exposée à un côté externe dans la direction radiale du caoutchouc de bande de roulement (10), pour former une seconde couche de chape (32).

4. Procédé de formation de caoutchouc de bande de roulement (S3) selon la revendication 3, dans lequel une longueur W2 dans la direction axiale de la première couche intermédiaire (21) formée à la deuxième étape (S32) est de 60 % à 80 % d'une longueur W1 dans la direction axiale du caoutchouc de bande de roulement (10).

5. Dispositif de formation de caoutchouc de bande de roulement (100, 100B) qui enroule en spirale et superpose des bandes de caoutchouc non vulcanisé en forme de ruban (GS1, GS2, GS3 et GS4) pour former un caoutchouc de bande de roulement annulaire (10) selon le procédé selon l'une quelconque des revendications 1 à 4, le dispositif (100, 100B) comprenant :
un premier applicateur (111) conçu pour enrouler et superposer la première bande de caoutchouc (GS1) tout en déplaçant la première bande de caoutchouc (GS1) dans une direction axiale du caoutchouc de bande de roulement (10), pour former la couche de base (1) ;
un deuxième applicateur (112) conçu pour enrouler et superposer la deuxième bande de caoutchouc non électriquement conductrice (GS2) dans une région sur un côté dans la direction axiale sur une surface circonférentielle externe de la couche de base (1) tout en déplaçant la deuxième bande de caoutchouc (GS2) dans la direction axiale, pour former la première couche intermédiaire (21) ;
un troisième applicateur (113) conçu pour enrouler et superposer la troisième bande de caoutchouc non électriquement conductrice (GS3) sur une surface circonférentielle externe de la première couche intermédiaire (21) tout en déplaçant la troisième bande de caoutchouc (GS3) dans la direction axiale, pour former la première couche de chape (31) ; et
un quatrième applicateur (114) conçu pour enrouler, dans une région sur un autre côté dans la direction axiale par rapport à la première couche intermédiaire (21) et à la première couche de chape (31), la quatrième bande de caoutchouc électriquement conductrice (GS4) depuis une position de contact avec la couche de base (1) jusqu'à une surface circonférentielle externe de la première couche de chape (31), pour former la couche électriquement conductrice (4).

6. Dispositif de formation de caoutchouc de bande de roulement (100, 100B) selon la revendication 5, dans lequel le troisième applicateur (113) enroule et superpose, sur un côté externe dans une direction radiale de la couche de base (1) et de la couche électriquement conductrice (4), la troisième bande de caoutchouc (GS3) dans une région sur l'autre côté dans la direction axiale par rapport à la couche électriquement conductrice (4) tout en déplaçant la troisième bande de caoutchouc (GS3) dans la direction axiale, de telle sorte qu'une partie de la couche électriquement conductrice (4) est exposée à un côté externe dans la direction radiale du caoutchouc de bande de roulement (10), pour former une seconde couche de chape (32).

7. Dispositif de formation de caoutchouc de bande de roulement (100, 100B) selon la revendication 6, dans lequel le deuxième applicateur (112) enroule et superpose, sur la surface circonférentielle externe de la couche de base (1) et une surface circonférentielle externe de la couche électriquement conductrice (4), la deuxième bande de caoutchouc (GS2) dans une région sur l'autre côté dans la direction axiale par rapport à la couche électriquement conductrice (4) tout en déplaçant la deuxième bande de caoutchouc (GS2) dans la direction axiale, de telle sorte qu'une partie de la couche électriquement conductrice (4) est exposée à un côté externe dans la direction radiale de la deuxième bande de caoutchouc (GS2), pour former une seconde couche intermédiaire (22).

8. Dispositif de formation de caoutchouc de bande de roulement (100B) selon l'une quelconque des revendications 5 à 7, comprenant en outre :
une paire de corps cylindriques (101 et 102) qui sont chacun exclusivement disposés au niveau d'une première position (P1) ou d'une seconde position (P2) et sur lesquels les bandes de caoutchouc (GS1, GS2, GS3 et GS4) sont enroulées ; et
une partie de mouvement (104) conçue pour déplacer les corps cylindriques (101 et 102), pour échanger mutuellement les corps cylindriques (101 et 102) disposés au niveau des positions respectives (P1 et P2), dans lequel
le premier applicateur (111) et le deuxième applicateur (112) sont agencés à des positions correspondant à la première position (P1), et
le troisième applicateur (113) et le quatrième applicateur (114) sont agencés à des positions correspondant à la seconde position (P2).

9. Dispositif de formation de caoutchouc de bande de roulement (100C) qui enroule en spirale et superpose des bandes de caoutchouc non vulcanisé en forme de ruban (GS1A, GS2A, GS3A, GS4A et GS5A) pour former un caoutchouc de bande de roulement annulaire (10), le dispositif (100C) comprenant :
un premier applicateur (111A) conçu pour enrouler et superposer une première bande de caoutchouc (GS1A) tout en déplaçant la première bande de caoutchouc (GS1A) dans une direction axiale du caoutchouc de bande de roulement (10), pour former une couche de base (1) ;
un deuxième applicateur (112A) conçu pour enrouler et superposer une deuxième bande de caoutchouc non électriquement conductrice (GS2A) sur une surface circonférentielle externe de la couche de base (1) tout en déplaçant la deuxième bande de caoutchouc (GS2A) dans la direction axiale, pour former une couche intermédiaire (2) ;
un troisième applicateur (113A) conçu pour enrouler une troisième bande de caoutchouc électriquement conductrice (GS3A) depuis une position de contact avec la couche de base (1) jusqu'à une surface circonférentielle externe de la couche intermédiaire (2), pour former une première couche électriquement conductrice (41) ;
un quatrième applicateur (114A) conçu pour enrouler et superposer une quatrième bande de caoutchouc non électriquement conductrice (GS4A) sur la surface circonférentielle externe de la couche intermédiaire (2) tout en déplaçant la quatrième bande de caoutchouc (GS4A) dans la direction axiale, pour former une couche de chape (3) ; et
un cinquième applicateur (115A) conçu pour enrouler une cinquième bande de caoutchouc électriquement conductrice (GS5A) depuis une position de contact avec la première couche électriquement conductrice (41) jusqu'à une surface circonférentielle externe de la couche de chape (3), pour former une seconde couche électriquement conductrice (42).

10. Dispositif de formation de caoutchouc de bande de roulement (100C) selon la revendication 9, dans lequel
le deuxième applicateur (112A) enroule et superpose la deuxième bande de caoutchouc (GS2A) dans une région sur un côté dans la direction axiale sur la surface circonférentielle externe de la couche de base (1), pour former une première couche intermédiaire (21),
le troisième applicateur (113A) enroule, jusqu'à une surface circonférentielle externe de la première couche intermédiaire (21), la troisième bande de caoutchouc (GS3A) dans une région sur un autre côté dans la direction axiale par rapport à la première couche intermédiaire (21), pour former la première couche électriquement conductrice (41), et
le deuxième applicateur (112A) enroule et superpose la deuxième bande de caoutchouc (GS2A) sur la surface circonférentielle externe de la couche de base (1) et une surface circonférentielle externe de la première couche électriquement conductrice (41) de telle sorte qu'une partie de la première couche électriquement conductrice (41) est exposée à un côté externe dans une direction radiale de la deuxième bande de caoutchouc (GS2A), pour former une seconde couche intermédiaire (22).

11. Dispositif de formation de caoutchouc de bande de roulement (100C) selon la revendication 10, dans lequel
le quatrième applicateur (114A) enroule et superpose la quatrième bande de caoutchouc (GS4A) sur une partie de la surface circonférentielle externe de la première couche intermédiaire (21), pour former une première couche de chape (31),
le cinquième applicateur (115A) enroule, jusqu'à la surface circonférentielle externe de la couche intermédiaire (2), la cinquième bande de caoutchouc (GS5A) dans une région sur l'autre côté dans la direction axiale par rapport à la première couche de chape (31), pour former la seconde couche électriquement conductrice (42), et
le quatrième applicateur (114A) enroule et superpose la quatrième bande de caoutchouc (GS4A) sur la surface circonférentielle externe de la couche intermédiaire (2) et une surface circonférentielle externe de la seconde couche électriquement conductrice (42) de telle sorte qu'une partie de la seconde couche électriquement conductrice (42) est exposée à un côté externe dans la direction radiale de la quatrième bande de caoutchouc (GS4A), pour former une seconde couche de chape (32).

12. Dispositif de formation de caoutchouc de bande de roulement (100C) selon l'une quelconque des revendications 9 à 11, comprenant en outre :
une paire de corps cylindriques (101 et 102) qui sont chacun exclusivement disposés au niveau d'une première position (P1) ou d'une seconde position (P2) et sur lesquels les bandes de caoutchouc (GS1A, GS2A, GS3A, GS4A et GS5A) sont enroulées ; et
une partie de mouvement (104) conçue pour déplacer les corps cylindriques (101 et 102), pour échanger mutuellement les corps cylindriques (101 et 102) disposés au niveau des positions respectives (P1 et P2), dans lequel
le premier applicateur (111A) au troisième applicateur (113A) sont agencés au niveau de positions correspondant à la première position (P1), et
le quatrième applicateur (114A) et le cinquième applicateur (115A) sont agencés au niveau de positions correspondant à la seconde position (P2).
